# EUROPEAN PATENT APPLICATION

(11) **EP 3 257 367 A1**
(43) Date of publication of application: **20.12.2017**
(21) Application number: 16749317.0
(22) Date of filing: 12.02.2016
(51) Int. Cl.: A01G 31/04, A01G 31/00, A01G 31/06

(54) **PLANT CULTIVATION DEVICE AND PLANT CULTIVATION SYSTEM**

(30) Priority: 13.02.2015 JP 2015027018; 19.02.2015 JP 2015031151; 02.04.2015 JP 2015076117
(71) Applicant: Itoh Denki Co., Ltd., Kasai-shi, Hyogo 675-2302 (JP)
(72) Inventor: ITOH, Kazuo, Kasai-shi, Hyogo 679-0180 (JP); NAKAMURA, Tatsuhiko, Kasai-shi, Hyogo 679-0180 (JP); TANAKA, Masaki, Kasai-shi, Hyogo 679-0180 (JP)
(74) Representative: Sajda, Wolf E.
(86) International application number: PCT/JP2016/054131
(87) International publication number: WO 2016/129674

(57) **Abstract**

Provided is a plant cultivation device (1) where installation work, repair, partial improvement or remodeling work can be performed easily. A plurality of seedling growing units (2) are connected to each other in series. The seedling growing unit (2) has a case (5) which has both ends thereof opened and can cover a peripheral surface of the seedling growing unit (2). A tray mounting base (12), a conveyance device (15), an illumination unit (16), and a water supply/discharge facility (17) are disposed inside the case (5). The cases of the seedling growing units (2) are connected to each other thus forming a continuous cylindrical space (60). A series of conveyance units are formed by the conveyance devices inside the cases. Cultivation trays are disposed in the continuous cylindrical space formed by the cases, and the cultivation trays are movable toward a downstream side by the conveyance unit in a state where the cultivation tray strides over the case.

## Description

### TECHNICAL FIELD

The present invention relates to a plant cultivation device for continuously cultivating plants such as field crops. The present invention also relates to a plant cultivation system formed by combining a plant cultivation device and an accompanying device.

### BACKGROUND ART

There has been known a plant cultivation device where field crops are continuously cultivated inside a building. The plant cultivation device is used for a cultivation mode usually referred to as a crop factory. That is, the plant cultivation device is a device where crops are grown by exposing crops to a proper amount of lighting by using an artificial illumination and by keeping the inside of,the building or the inside of a room at a temperature and a humidity suitable for growing crops.

With the use of such a plant cultivation device, crops can be produced in an environment where amount of lighting, temperature, moisture, concentration of a fertilizer and the like are properly controlled. Accordingly, with the use of the plant cultivation device, a period necessary for harvesting can be shortened compared to an open field culture.

Among all plant cultivation devices, many plant cultivation devices are used for growing crops by hydroponic culture. Hydroponic culture is clean compared to open culture. Further, in hydroponic culture, crops are cultivated indoors and hence, it is possible to prevent crops from being infested with harmful insects and hence, crops can be cultivated without using agricultural chemicals. Accordingly, the plant cultivation device is suitable for cultivating vegetables, such as lettuce, which can be eaten without requiring peeling of a skin.

In plant cultivation devices disclosed in Patent Documents 1 and 2, a conveyor device which advances at an extremely low speed is used as a main unit. A cultivation tray in which seedlings are planted is placed on a start end portion of the conveyor device, and the cultivation tray is moved to a growing area. In the growing area, lighting is ensured by artificial illumination. The above-mentioned cultivation tray is placed on the conveyor device and the cultivation tray is slowly advanced in the growing area.

When the cultivation tray reaches a terminal end of the conveyor device, seedlings are grown to a size enough to be harvested.

### PRIOR ART DOCUMENTS

### PATENT DOCUMENTS

- Patent Document 1:: JP H02-60529 A
- Patent Document 2:: JP 2001-78577 A

### DISCLOSURE OF THE INVENTION

### TECHNICAL PROBLEM

In a plant cultivation device of the prior art, the whole configuration including a building or a room formed by partitioning the inside of the building forms one plant cultivation device and hence, construction work, repair, partial improvement or remodeling work becomes a large-scale operation.

In the plant cultivation device of the prior art, the whole environment in the building or in the room is maintained at a temperature and a humidity suitable for growing a plant to be cultivated.

Accordingly, a large amount of heat or cold is necessary for maintaining the environment and hence, the plant cultivation device of the prior art has a drawback that energy cost is high.

Further, as described above, in the plant cultivation device of the prior art, the environment in the whole building or the whole room is maintained at a temperature and a humidity suitable for growing a plant to be cultivated and hence, it is difficult to cultivate plants having different growing conditions in mixture.

For example, it is difficult to simultaneously cultivate crops which prefer high temperature and high humidity and crops which prefer a cool environment in the same building or in the same room.

In the plant cultivation device of the prior art, the invasion of harmful insects such as a cabbage butterfly, an aphid, or a locust into a building or a room must be strictly prohibited and hence, a strict harmful insect invasion preventing unit is mounted at an entrance and an exit, a ventilation window and the like of the building or the like. When a harmful insect invades the building or the room by a chance, the extermination of the harmful insect is extremely difficult. That is, in the plant cultivation device, agricultural chemicals are not used in principle. Accordingly, there may be a case where the cultivation of crops must be suspended for several days.

The present invention has been made by focusing on the above-mentioned drawbacks that the plant cultivation device of the prior art has, and it is an object of the present invention to provide a plant cultivation device where installation work, repair, partial improvement or remodeling work can be performed easily, energy cost can be reduced, and countermeasures for exterminating harmful insects or the like can be also easily taken.

### SOLUTION TO THE PROBLEM

According to an aspect to overcome the above-mentioned drawbacks, there is provided a plant cultivation device including:
a plurality of cultivation trays having seedlings or seeds of a plant planted thereon; an illumination unit irradiating the plant with light; a conveyance unit sequentially moving the cultivation trays toward a downstream side from an upstream side with simultaneous allowance of growth of the plant on the cultivation trays; and a plurality of seedling growing units, each of the seedling growing units including a case with both ends thereof opened, the case being capable of covering a peripheral surface of the seedling growing unit, wherein the cases of the plurality of seedling growing units are connected to each other to form a continuous cylindrical space, and wherein the cultivation trays are placed in the continuous cylindrical space formed by the cases, the cultivation trays being moved toward the downstream side across the cases by the conveyance unit.

The plant cultivation device according to this aspect includes a plurality of seedling growing units, and the cylindrical space which becomes a cultivation space is formed by connecting the seedling growing units. The cultivation trays are moved toward the downstream side by the conveyance unit in a state where the cultivation tray strides over the case.

The respective seedling growing units can be manufactured at a manufacturing factory.

In the present invention, it is assumed that the respective seedling growing units are manufactured at a manufacturing factory. The seedling growing units manufactured in the manufacturing factory are carried in an installation site and are connected to each other thus completing the plant cultivation device.

According to the present invention, operations in the installation site can be largely reduced. Accordingly, an installation work of the plant cultivation device according to the present invention can be performed easily.

By performing a repair of the plant cultivation device by removing the seedling growing unit, it is possible to prevent a repair work from becoming a large-scale operation.

The entire length of the plant cultivation device or a growing period of a plant can be changed by changing the number of seedling growing units to be connected to each other.

It is sufficient to perform environmental adjustment only in the continuous cylindrical space. Accordingly, a space which requires environmental adjustment can be reduced and hence, energy necessary for environmental adjustment can be reduced.

The plant cultivation device according to the present invention can also easily exterminate harmful insects when the harmful insects invade the plant cultivation device. That is, according to the present invention, the space which requires extermination of insects becomes small and, further, imagoes, larvae, and eggs of harmful insects minimally hide themselves in the space and hence, the harmful insects can be easily exterminated even when the harmful insects invade the plant cultivation device.

It is desirable that the illumination unit be disposed inside the case.

In addition to the above-mentioned configuration, it is desirable that the continuous cylindrical space be formed by three or more seedling growing units, and the seedling growing unit disposed in an intermediate portion be individually detachably mounted.

According to this aspect, maintenance of the plant cultivation device is facilitated.

It is desirable that the cases which are disposed adjacently to each other be arranged in a state where end portions of the cases face each other, and the cases disposed adjacently to each other be connected to each other with a connecting member interposed between the end portions of the cases.

According to this aspect, the case disposed at an intermediate portion can be easily removed.

It is desirable that the cases of the seedling growing units be lineally disposed with a distance, a connecting member be disposed between the cases of the adjacent seedling growing units, and sealing property be held between the adjacent cases by the connecting member to form a continuous cylindrical space.

According to this aspect, a distance is provided between the cases. Accordingly, the connection of pipes or the like can be performed between the cases.

It is desirable that the case of the seedling growing unit include therein: a placing table placing the cultivation tray thereon; and a pressing member pressing the cultivation tray toward the downstream side.

The pressing member may be operated by power such as a motor, a pneumatic pressure, or a hydraulic pressure. The pressing member may rely on man power such as power generated when an operator manually rotates the pressing member.

A motor or the like which drives the pressing member may be disposed inside the case. A motor or the like which drives the pressing member may be disposed outside the case.

It is desirable that the pressing member which presses the cultivation tray toward the downstream side be incorporated inside the case of the seedling growing unit, the pressing members in the plurality of cases be connected to each other by connecting members, and the pressing members in the plurality of cases be driven by a same power source.

According to this aspect, the number of power sources for driving the pressing members can be reduced.

The configuration may be employed where the pressing member which presses the cultivation tray toward the downstream side, and a part of a moving mechanism which moves the pressing member are incorporated inside the case of the seedling growing unit, and a power transmission member which transmits power between the moving mechanisms incorporated in the cases disposed adjacently to each other is disposed between the cases disposed adjacently to each other.

According to this aspect, the number of power sources for driving the pressing members can be reduced. Further, the power transmission member is disposed between the cases disposed adjacently to each other and hence, the power transmission member can be easily mounted or removed.

It is recommended that the plant cultivation device includes an open/close member which opens/closes an opening of a continuous cylindrical space on at least one end side.

According to this aspect, the cylindrical spaces can be sealed.

It is desirable that the open/close member include a sheet-like member and a moving unit which moves the sheet-like member, an opening be formed in the sheet-like member, the cylindrical space be opened by making a position of the opening and the cylindrical space agree with each other, and the cylindrical space be brought into a sealed state by making portions other than the opening agree with the cylindrical space.

It is desirable that a part or the whole of an inner surface of the case exhibit a reflectance of 40% or more.

Although the reflectance differs depending on a wavelength of light, the reflectance is determined with reference to sunbeam in the aspect.

It is desirable that the case include: a ceiling surface bent in an arcuate shape; the cultivation trays therein; and the illumination unit on the ceiling surface, the illumination unit being formed of a plurality of light emitting elements, and density of arrangement of the light emitting elements in the vicinity of a peak of the ceiling surface be lower than in outskirt regions of the ceiling surface.

It is desirable that the illumination unit flicker at a fine time interval.

To compare a growing state when a plant is irradiated with illumination which continuously emits light and a growing state when a plant is irradiated with light which flickers at a fine time interval which cannot be distinguished by naked eyes, there is no large difference between both growing states. Accordingly, in this aspect, the illumination unit which flickers at a fine time interval is adopted. According to this aspect, power consumption of the illumination unit can be reduced.

It is desirable that the plant cultivation device include a water cooling unit which cools an outer peripheral surface of the case by water.

For example, when the illumination unit is incorporated inside the case, a temperature inside the cylindrical space is excessively elevated due to heat generated by illumination. According to this aspect, the plant cultivation device includes the water cooling unit which cools the outer peripheral surface of the case by water and hence, the excessive elevation of a temperature in the cylindrical space can be suppressed.

Since the illumination is mounted on a ceiling portion of the case in many examples and hence, it is desirable to cool a roof portion of the case by water.

When the plant cultivation device adopts the configuration where the outer peripheral surface of the case is cooled by water, it is desirable that the outer peripheral surface of the case be covered by a member having a moisture retaining property so as to always bring the outer peripheral surface of the case in a wet state.

It is desirable that at least any one of the following constitutional elements be disposed between the cases.
(1) connecting unit and/or merging unit of supply passages of culture solution
(2) branching unit for branching branch pipe from main pipe through which culture solution is supplied
(3) connecting unit and/or merging unit of discharge passages of culture solution
(4) connecting unit and/or merging unit of electric wiring of illumination
(5) branching units leading to respective illuminations from main line of electric wiring of illumination
(6) connecting unit and/or merging unit of air conditioning ducts
(7) branching unit of air conditioning duct
(8) connecting unit and/or merging unit of carbon dioxide pipes
(9) branching unit of carbon dioxide pipe
(10) valve
(11) distributer
(12) fuse.

It is desirable that the plant cultivation device includes a holding member for holding the plurality of cases, the holding member includes a bottom support portion which supports a bottom of the case, the bottom of the case be supported by the bottom support portion, and the case be configured to move in a direction which intersects with an axial direction of the cylindrical space by being slid on the bottom support portion.

According to this aspect, the case is supported by the bottom support portion. Further, the case can be moved in the direction which intersects with the axial direction of the cylindrical space by being slid on the bottom support portion. Accordingly, a case exchanging operation and a case installing operation can be performed easily. That is, according to this aspect, the case exchanging operation and the case installing operation can be performed by laterally sliding the case.

According to an aspect of a plant cultivation system, the plant cultivation devices respectively having the above-mentioned configuration are installed in plural stages and/or in plural rows.

According to this aspect, it is possible to effectively make use of a space.

According to another aspect of a plant cultivation system which is an improvement of the above-mentioned system, there is provided a plant cultivation system having a plurality of the plant cultivation devices having the above-mentioned configuration, the plant cultivation system including: the plant cultivation device for young seedlings that has a low height of the cylindrical space; and the plant cultivation device for grown seedlings that has a higher height of the cylindrical space than the plant cultivation device for young seedlings.

According to this aspect, it is possible to use the plant cultivation device having a proper height in conformity with a growth of seedling. Accordingly, it is possible to effectively make use of the space.

According to another aspect of a plant cultivation system which is an improvement of the above-mentioned system, there is provided a plant cultivation system which includes a plurality of plant cultivation devices having different structures and/or different environments inside the cylindrical space.

According to another aspect of a plant cultivation system which is an improvement of the above-mentioned system, there is provided a plant cultivation system having a plurality of the plant cultivation devices having: different structures, and/or different environments of the cylindrical spaces; and a tray exchange device transferring the cultivation tray from one of the plant cultivation devices to another of the plant cultivation devices.

According to this aspect, it is possible to easily perform an operation of transferring the cultivation tray from one plant cultivation device to another plant cultivation device.

According to another aspect of a plant cultivation system which is an improvement of the above-mentioned system, there is provided a plant cultivation system which includes a group of plant cultivation devices where plant cultivation devices are disposed in plural stages and/or in plural rows, and a unit conveyance device disposed in the vicinity of the group of plant cultivation devices, and the unit conveyance device includes: a fork portion which is insertable into a bottom side of a seedling growing unit and holds the seedling growing unit from below; a lifting and lowering unit capable of lifting and lowering the fork portion; and a traveling unit capable of moving the fork portion along the row of the seedling growing units.

According to this aspect, an installing operation and an exchanging operation of seedling growing units can be easily performed.

According to another aspect of a plant cultivation system which is an improvement of the above-mentioned system, there is provided a plant cultivation system which includes a group of plant cultivation devices where plant cultivation devices are disposed in plural stages and/or in plural rows, and a conveyor device additionally disposed at least above or below the group of plant cultivation devices.

It is desirable that the conveyor device be used for conveying empty cultivation trays or cultivation trays on which plants are grown.

According to another aspect of a plant cultivation system which is an improvement of the above-mentioned system, there is provided a plant cultivation system which includes a group of plant cultivation devices where plant cultivation devices are disposed in plural stages and/or in plural rows, and at least one of the following constitutional elements is disposed above or below the group of plant cultivation devices.
(1) power supply cable
(2) flow passage for culture solution
(3) carbon dioxide pipe
(4) air conditioning duct
(5) signal lines.

According to an aspect of a comprehensive plant cultivation system, there is provided a plant cultivation system where a group of plant cultivation devices is formed by disposing plant cultivation devices in plural stages and/or in plural rows, the group of plant cultivation devices includes plant cultivation devices for young seedlings where a height of a cylindrical spaces is low and plant cultivation devices for grown seedlings where a height of a cylindrical space is higher than the height of the cylindrical space in the plant cultivation devices for young seedlings thus providing the plurality of plant cultivation devices which differ from each other in structure and/or an environment in the cylindrical space, the plant cultivation system includes a tray exchange device capable of transferring a cultivation tray from one plant cultivation device to another plant cultivation device, the plant cultivation system includes a unit conveyance device disposed in the vicinity of the group of plant cultivation devices, the unit conveyance device includes: a fork portion which is insertable into a bottom side of a seedling growing unit and holds the seedling growing unit from below; a lifting and lowering unit capable of lifting and lowering the fork portion; and a traveling unit capable of moving the fork portion along the row of the seedling growing units, a conveyor device is additionally disposed at least above or below the group of plant cultivation devices, and at least one of the following constitutional elements is disposed above or below the group of plant cultivation devices.
(1) power supply cable
(2) flow passage for culture solution
(3) carbon dioxide pipe
(4) air conditioning duct
(5) signal lines.

It is desirable that air pressure in the cylindrical space be held more than atmospheric pressure.

In the above-mentioned respective aspects, it is desirable that the plant cultivation device include an air supply unit moving air in the cylindrical space by supplying air, the air supply unit including a supply air volume adjusting unit changing a supply air volume for respective areas.

According to this aspect, wind is generated in the cylindrical space so that an environment close to nature is created and plants can be grown in such an environment.

It is desirable that the supply air unit include an air supply passage forming member in the cylindrical space, the air supply passage forming member including a plurality of air supply ports supplying air into the cylindrical space.

It is desirable that the plant cultivation device include an air volume adjusting unit that opens or closes the air supply ports, or adjusts opening degree of the air supply ports.

It is desirable that the air supply passage forming member include a plurality of blowers therein in series with a distance, and the air supply ports be disposed between an air supply side of the blower on an upstream side and a suction side of the blower on a downstream side.

The number of days required for the growing of plants ranges from approximately 10 days to 30 days. Accordingly, an entire length of the cylindrical spaces becomes considerably long and hence, the supply air passage forming member also inevitably becomes considerably long. Accordingly, it is difficult to supply air to a terminal end of the air supply passage forming member with the configuration where air is supplied by disposing the blower only on the end portion of the air supply passage forming member.

Accordingly, in this aspect, the configuration is adopted where the plurality of blowers are incorporated in the air supply passage forming member in series at intervals.

In the above-mentioned respective aspects, it is desirable that the plant cultivation device include a culture solution supply unit supplying a culture solution to the cultivation trays, the culture solution supply unit including a solution amount adjusting unit adjusting an amount of the culture solution to be supplied to the cultivation trays.

It is desirable that the solution amount adjusting unit include an auxiliary pump, the auxiliary pump being attached to each of the plurality of seedling growing units.

In the above-mentioned respective aspects, it is desirable that the cultivation tray capable of storing a culture solution therein include: a discharge port discharging a surplus culture solution; and a culture solution supply unit supplying the culture solution to the cultivation tray from a point close to one side of the cultivation tray, and the discharge port of the cultivation tray be disposed at a position close to the side to which the culture solution is supplied.

In the above-mentioned respective aspects, it is desirable that the cultivation tray include a culture solution flow passage configured in such a manner that a culture solution is supplied to the cultivation tray from the culture solution supply unit, is circulated inside the cultivation tray, and reaches the discharge port.

According to this aspect, a culture solution flows into the cultivation tray and hence, it is possible to prevent the culture solution from stagnating in a particular place.

In the above-mentioned respective aspects, it is desirable that the cultivation tray be configured to store a culture solution therein, and the plant cultivation device include a cultivation tray inclining unit that discharges the culture solution by inclining the cultivation tray.

The cultivation tray inclining unit is made to function at the time of discharging the cultivation tray from the cylindrical space as in the case of harvesting plants, for example. By inclining the cultivation tray by the cultivation tray inclining unit thus discharging a culture solution, a weight of the cultivation tray is decreased so that the cultivation tray can be easily discharged. Further, it is possible to prevent a culture solution from being spilled on an outside floor or the like.

It is desirable that a plant cultivation system have the plant cultivation devices having the above-mentioned configuration, the plant cultivation system including a lifting and lowering device lifting and lowering the cultivation tray thereon.

It is desirable that a plant cultivation system having the plant cultivation devices having the above-mentioned configuration are disposed in plural stages, the plant cultivation system including a lifting and lowering device lifting and lowering the cultivation tray thereon, wherein the conveyance unit of the plant cultivation device includes a linearly moving member that linearly moves, the linearly moving member including a tray facing engaging portion, the tray engaging portion engaging with the cultivation tray to convey the cultivation tray, and wherein the lifting and lowering device includes a conveyance unit drive device driving the conveyance unit of the plant cultivation device.

It is desirable that the conveyance unit have a conveyance-unit-side engaging portion and the conveyance unit drive device has a drive-side engaging portion engaging with the conveyance-unit-side engaging portion, the conveyance-unit-side engaging portion and the drive-side engaging portion be capable of performing engagement and release of engagement by relative movement of the engaging portions in a vertical direction, and the engagement and the release of the engagement between the conveyance-unit-side engaging portion and the drive-side engaging portion be performed by lifting and lowering the lifting and lowering device.

It is desirable that a plant cultivation system be configured such that the plant cultivation devices having the above-mentioned configuration are disposed in plural stages, the plant cultivation system including a lifting and lowering device lifting and lowering the cultivation tray thereon, wherein the cultivation tray is configured to store a culture solution therein, and wherein the plant cultivation device includes a cultivation tray inclining unit that discharges the culture solution by inclining the cultivation tray.

It is desirable that the cultivation tray inclining unit include an inclining engaging member engaging with the cultivation tray, and the lifting and the lowering member be elevated with the inclining engaging member engaged with the cultivation tray to incline the cultivation tray.

It is desirable that the plant cultivation system include a moving unit that moves the inclining engaging member toward the cultivation tray, wherein the inclining engaging member moves from a position where the inclining engaging member is not engageable with the cultivation tray to a position where the inclining engaging member is engageable with the cultivation tray.

### EFFECT OF INVENTION

The plant cultivation device and plant cultivation system according to the present invention can easily perform an installation work, repair, partial improvement or remodeling work, can reduce energy cost, and easily take measures to exterminate harmful insects.

### BRIEF DESCRIPTION OF DRAWINGS

- FIG. 1: is a perspective view showing an overall view of a plant cultivation device (plant cultivation system) according to an embodiment of the present invention.
- FIG. 2: is a perspective view showing an overall view of the plant cultivation device (plant cultivation system) where the plant cultivation device (plant cultivation system) shown in FIG. 1 is expressed in the form of a model.
- FIG. 3: is a conceptual view of the plant cultivation device (plant cultivation system) shown in FIG. 2 where the plant cultivation device (plant cultivation system) is divided into zones functionally.
- FIG. 4: is a perspective view of a portion of a grown seedling frame and a seedling growing unit of the plant cultivation device shown in FIG. 2.
- FIG. 5A and FIG. 5B: are perspective views showing the configuration of a unit plant cultivation device, wherein FIG. 5A shows a state where connecting members are removed from between seedling growing units, and FIG. 5B shows a state where the seedling growing units are connected to each other.
- FIG. 6: is a perspective view showing the inner structure of the seedling growing unit shown in FIG. 5A and FIG. 5B.
- FIG. 7: is a perspective view showing the inner structure of the seedling growing unit shown in FIG. 5A and FIG. 5B in a state where cultivation trays are inserted into the seedling growing unit.
- FIG. 8: is a partially enlarged perspective view of end portions of the seedling growing units showing the inner structure of the seedling growing units and a relationship between the seedling growing units disposed adjacently to each other.
- FIG. 9: is a front view showing the inner structure of the seedling growing unit shown in FIG. 5A and FIG. 5B.
- FIG. 10: is an exploded perspective view of a cultivation tray used in the plant cultivation device shown in FIG. 2.
- FIG. 11A to FIG. 11D: are explanatory views showing an operation of moving cultivation trays by a conveyance device incorporated into the seedling growing units shown in FIG. 4.
- FIG. 12: is a perspective view showing a portion of a grown seedling frame of the plant cultivation device (plant cultivation system) shown in FIG. 2.
- FIG. 13: is a perspective view of an opening and closing unit adopted by the plant cultivation device (plant cultivation system) shown in FIG. 2.

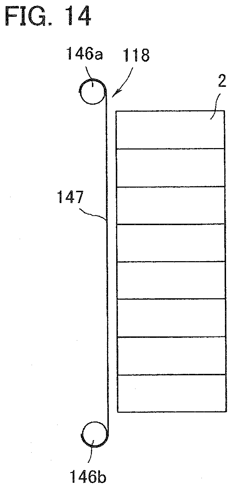

- FIG. 14: is a front view of the opening and closing unit adopted by the plant cultivation device (plant cultivation system) shown in FIG. 2.
- FIG. 15: is a perspective view showing an inner structure of a seedling growing unit in another embodiment of the present invention.
- FIG. 16: is a perspective view of a conveyance device incorporated in the seedling growing unit shown in FIG. 15.
- FIG. 17: is a perspective view of a main part of a conveyance device incorporated in a seedling growing unit in another embodiment of the present invention.
- FIG. 18A and FIG. 18B: are front views of a main part of the conveyance device shown in FIG. 17, wherein FIG. 18A shows a state where a power transmission member is removed, and FIG. 18B shows a state where the power transmission member is mounted.
- FIG. 19: is a conceptual view of a plant cultivation device (plant cultivation system) according to another embodiment of the present invention.
- FIG. 20: is a plan view showing a layout of a plant cultivation device (plant cultivation system) according to still another embodiment of the present invention.
- FIG. 21A and FIG. 21B: are views showing a plant cultivation device according to still another embodiment of the present invention, wherein FIG. 21A is a perspective view showing the configuration of a unit plant cultivation device in a state where connecting members are removed from between seedling growing units, FIG. 21B is a perspective view showing the configuration of the unit plant cultivation device in a state where seedling growing units are connected to one by one.
- FIG. 22A and FIG. 22B: are views of a plant cultivation device (plant cultivation system) according to still another embodiment of the present invention, wherein FIG. 22A is a front view showing a layout of the plant cultivation device (plant cultivation system) and FIG. 22B is a plan view of the plant cultivation device (plant cultivation system).

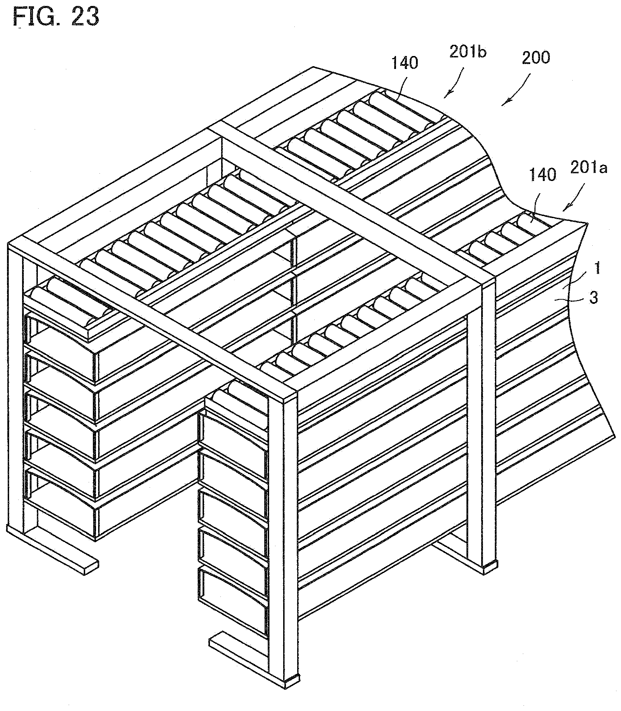

- FIG. 23: is a cross-sectional perspective view as viewed from an A-A direction in FIG. 22.
- FIG. 24: is a perspective view showing an inner structure of a seedling growing unit in still another embodiment of the present invention.
- FIG. 25A to FIG. 25C: are views of the seedling growing unit shown in FIG. 24, wherein FIG. 25A is a front view showing the inner structure of the seedling growing unit shown in FIG. 24, FIG. 25B is a partially enlarged cross-sectional view of a roof portion of the seedling growing unit, and FIG. 25C is an explanatory view for explaining the distribution of light emitting elements on an inner surface of the roof portion.
- FIG. 26: is a perspective view of an air supply passage forming member incorporated in the seedling growing unit shown in FIG. 24.
- FIG. 27: is an exploded cross-sectional perspective view of the air supply passage forming member shown in FIG. 26.
- FIG. 28A to FIG. 28C: are cross-sectional views of the vicinity of an air supply port of the air supply passage forming member shown in FIG. 26, wherein FIG. 28A shows an air supply port in a fully open state, FIG. 28B shows the air supply port in a half open state, and FIG. 28C shows the air supply port in a fully closed state.
- FIG. 29: is an exploded perspective view of a cultivation tray according to still another embodiment of the present invention.
- FIG. 30: is a plan view of the cultivation tray shown in FIG. 29.
- FIG. 31: is a perspective view of a lifting and lowering device adopted by a plant cultivation device (plant cultivation system) of still another embodiment of the present invention.

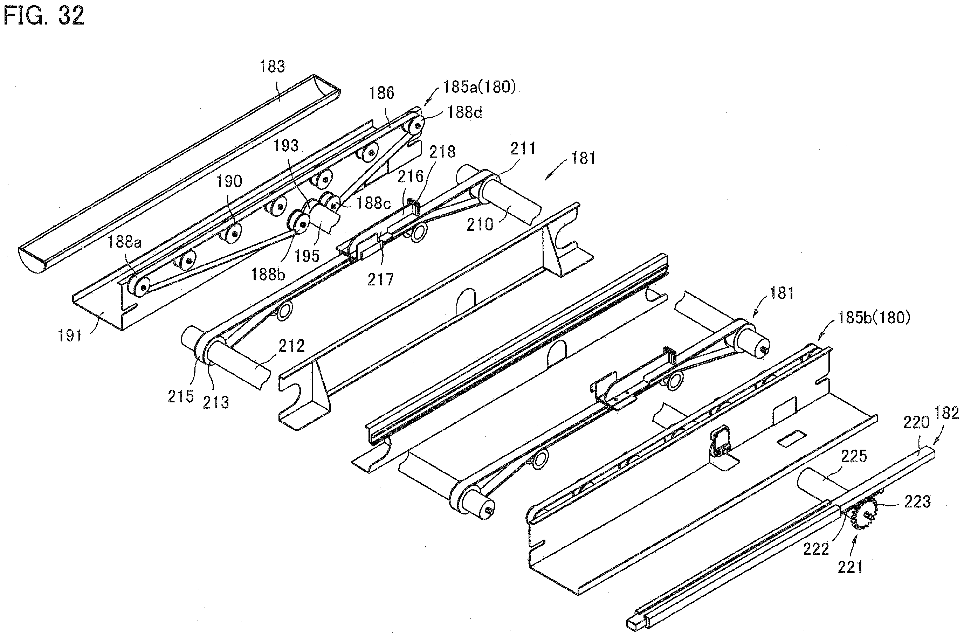

- FIG. 32: is an exploded perspective view of the lifting and lowering device shown in FIG. 31.
- FIG. 33A to FIG. 33E: are views showing an operation of the plant cultivation device in FIG. 22, and are front views and side views of the plant cultivation device showing steps of discharging a culture solution by inclining the cultivation tray immediately before taking out the cultivation tray toward a lifting and lowering device side from a cylindrical space.
- FIG. 34A to FIG. 34C: are views showing an operation of the plant cultivation device in FIG. 22, and are front views and plan views of the plant cultivation device showing steps of taking out the cultivation tray toward the lifting and lowering device side from the cylindrical space.
- FIG. 35D and FIG. 35E: are views showing an operation of the plant cultivation device in FIG. 22 succeeding from the operation shown in FIG. 34, and are front views and plan views of the plant cultivation device showing steps of taking out the cultivation tray toward the lifting and lowering device side from the cylindrical space.
- FIG. 36A to FIG. 36E: are perspective views showing a relationship between a conveyance-unit-side engaging portion and a drive-side engaging portion in the respective steps shown in FIG. 34 and FIG. 35.

### BEST MODE FOR CARRYING OUT THE INVENTION

Hereinafter, an embodiment of the present invention is described.

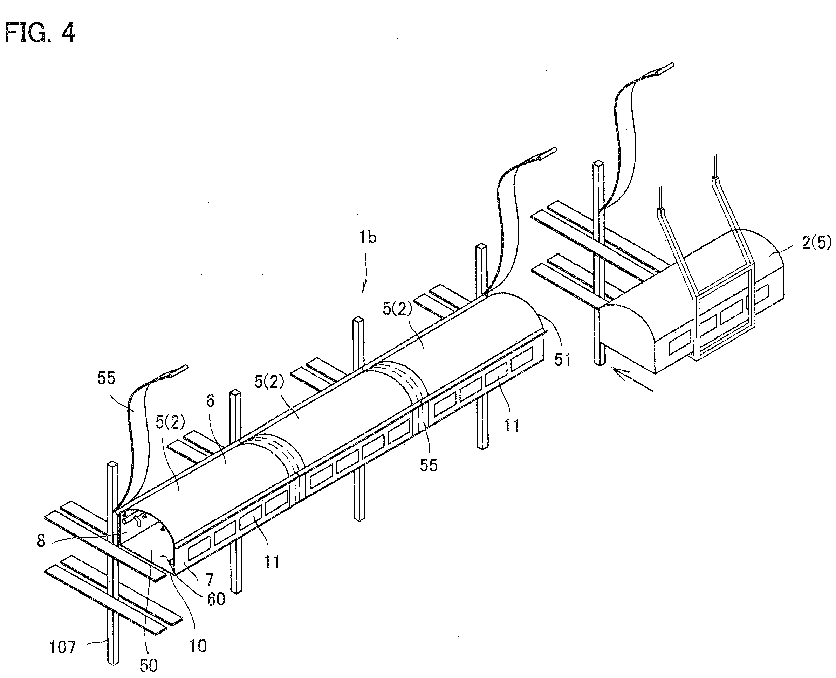

A plant cultivation device according to an embodiment of the present invention is configured such that seedling growing units 2 each having the same shape and the same structure as shown in FIG. 4 are connected in series thus forming a continuous cylindrical space, and plants are cultivated in the cylindrical spaces. In the embodiment of the present invention, a structure which is formed by connecting the above-mentioned seedling growing units 2 in series forms a single unit plant cultivation device 1.

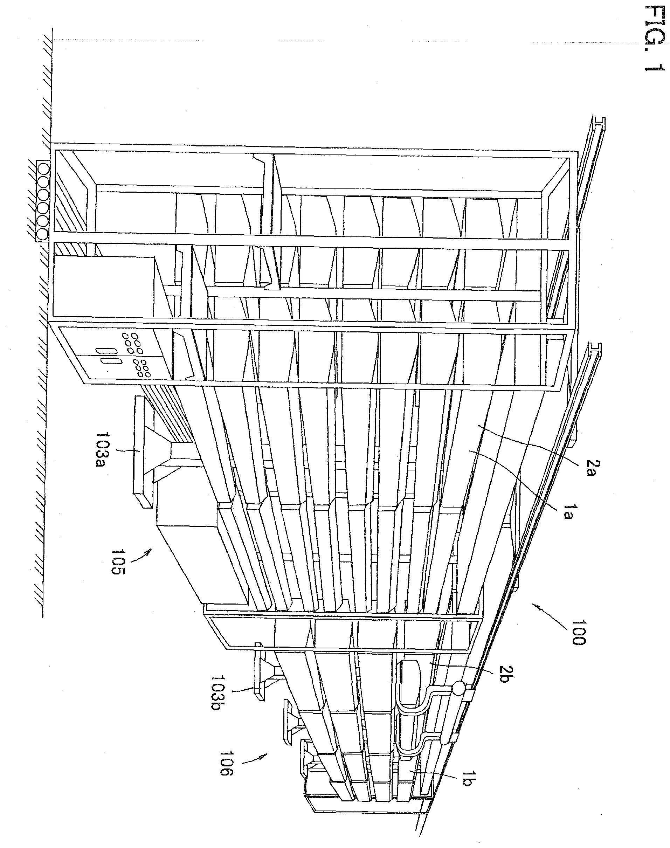

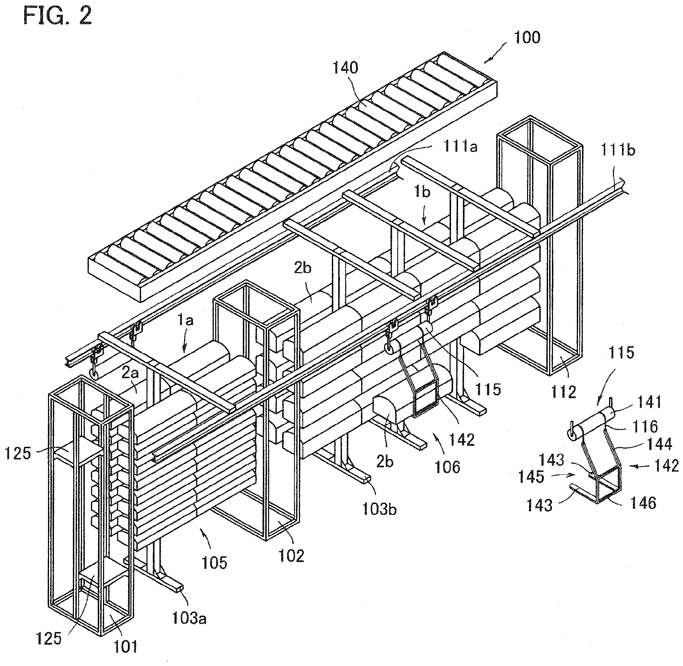

In this embodiment, as shown in FIG. 1 and FIG. 2, a plural number of unit plant cultivation devices 1 described above are installed on a young seedling frame 103 a and a grown seedling frame 103b and an accompanying facility is added thus forming a comprehensive plant cultivation device (plant cultivation system) 100.

To distinguish both devices from each other, the former is referred to as "unit plant cultivation device 1" and the latter is referred to as "comprehensive plant cultivation device 100".

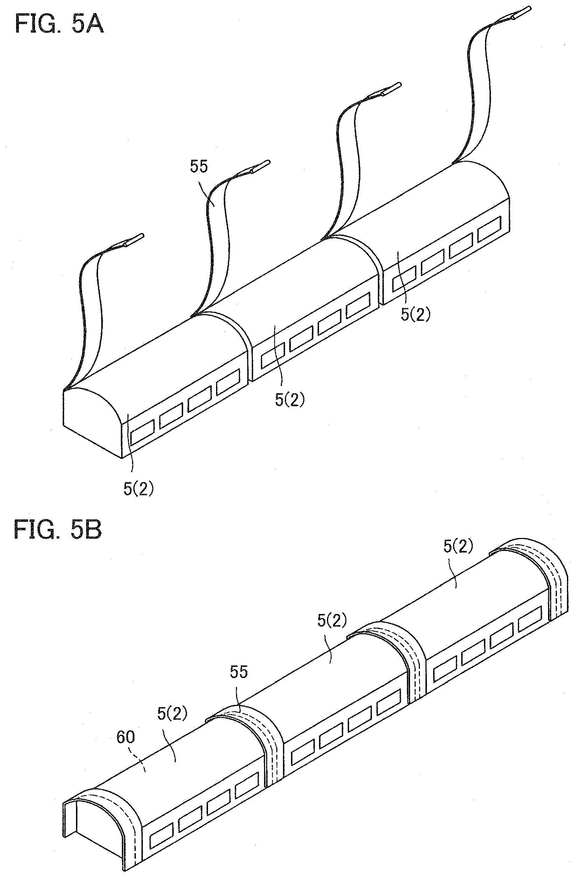

The unit plant cultivation device 1 is, as shown in FIG. 1, FIG. 2, FIG. 4 and FIG. 5, formed by connecting a plurality of seedling growing units 2 to each other in series. In FIG. 4 and FIG. 5, in view of the relationship necessary for preparing these drawings, a total length of the individual seedling growing unit 2 is set shorter than an actual length. The length of the actual seedling growing unit 2 is longer as shown in FIG. 1 and FIG. 2.

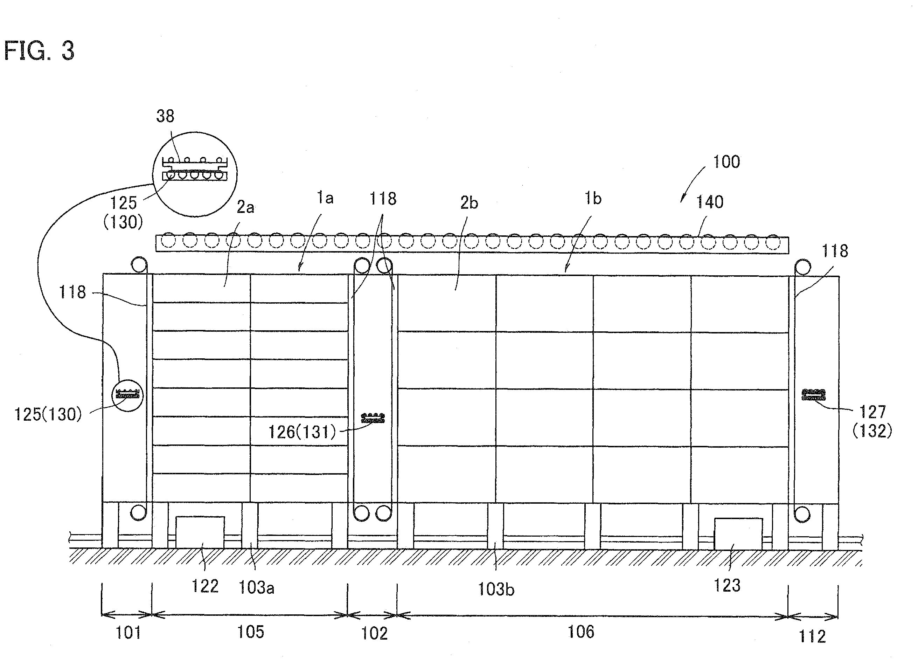

In the comprehensive plant cultivation device 100 of this embodiment, young seedling unit plant cultivation devices 1a each formed of young seedling growing units 2a and grown seedling unit plant cultivation devices 1b each formed of grown seedling growing units 2b are disposed in a mixed form. However, the young seedling growing unit 2a and the grown seedling growing unit 2b differ from each other only in height and have the same inner structure. Accordingly, in the description made hereinafter, the description is made by collectively referring to the young seedling growing unit 2a and the grown seedling growing unit 2b as "seedling growing unit 2". The seedling growing unit 2 shown in FIG. 3, FIG. 4, FIG. 5 and FIG. 6 is the grown seedling growing unit 2b.

The seedling growing unit 2 has a case 5 which has both ends thereof opened and can cover a peripheral surface of the seedling growing unit 2.

The case 5 includes a roof portion 6 having an arcuate shape, a bottom surface portion 10, and side surface portions 7, 8 having a vertical wall shape which connect the roof portion 6 and bottom surface portion 10 to each other. The case 5 has a longitudinal length of approximately 3 m. The case 5 has a width of approximately 1 m. Both ends of the case 5 are opened. One opening is referred to as an introducing opening 50 and the other opening is referred to as a discharging side opening 51.

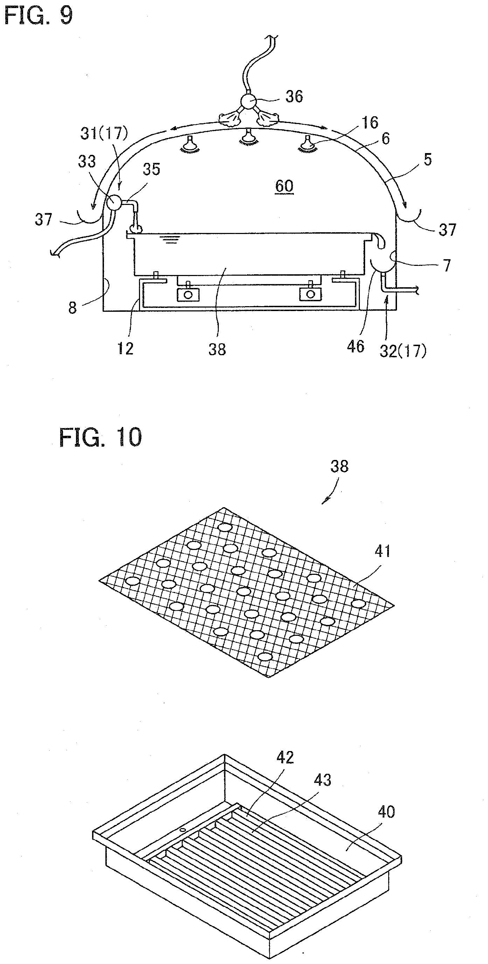

A pipe 36 is mounted on a ridge portion of the roof portion 6 as shown in FIG. 9. A plurality of small holes are formed in the pipe 36. A cooling water collecting trough 37 is formed on eave portions of the roof portion 6.

As shown in FIG. 4 and FIG. 5, four inspection windows 11 are formed on one side wall surface portion 7 of the case 5. The inspection windows 11 are transparent so that the situation in the case 5 is viewable from the outside. The inspection windows 11 are also openable and closable so that an operator can insert his hand into the inside of the case 5 through the inspection window 11.

The case 5 is made of a colored resin or metal, and portions of the case 5 other than the inspection windows 11 are opaque.

An inner surface of the case 5 is coated with a reflective paint. Accordingly, the inner surface of the case 5 has reflectance of 40% or more using a sunbeam as the reference. It is desirable that the inner surface of the case 5 have reflectance of 60% or more, and it is recommendable that the inner surface of the case 5 have reflectance of 80% or more.

As shown in FIG. 1, FIG. 2 and FIG. 4, in a state where the case 5 is disposed on a frame (a young seedling frame 103a or a grown seedling frame 103b), the side surface portion 7 on which the inspection windows 11 are formed faces an operation aisle side, and the side surface portion 8 on a side opposite to the side surface portion 7 forms a back side. Accordingly, for the sake of convenience of the description, the side surface portion 7 on which the inspection windows 11 are formed is referred to as the aisle-side side surface portion 7 and the side opposite to the aisle-side side surface portion 7 is referred to as the back-side side surface portion 8.

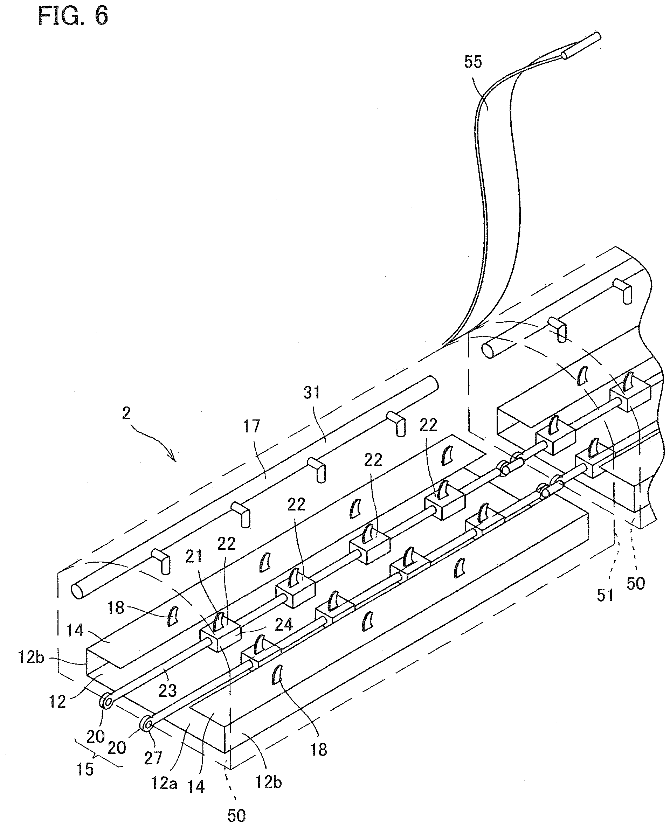

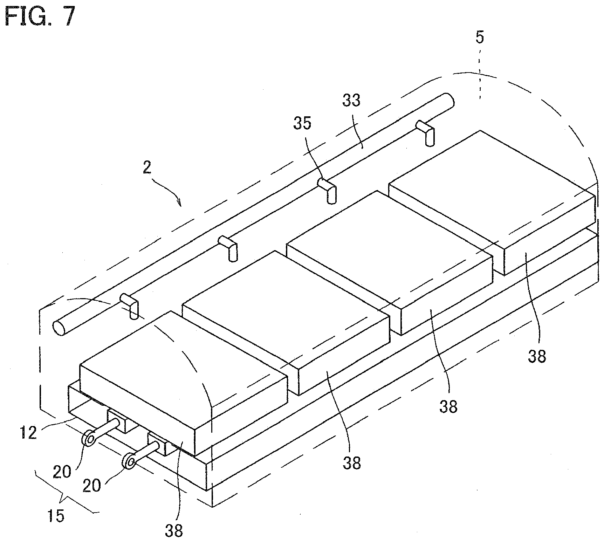

In this embodiment, as shown in FIG. 6 and FIG. 7, inside the case 5, a tray mounting base 12, a conveyance device 15, an illumination unit 16 and a water supply/discharge facility 17 are disposed.

The tray mounting base 12 can slidably move cultivation trays 38 described later in a state where the cultivation trays 38 are placed on the tray mounting base 12.

The tray mounting base 12 is formed by bending a metal sheet, and has a placing portion 14 extending in a strip shape on both left and right ends thereof.

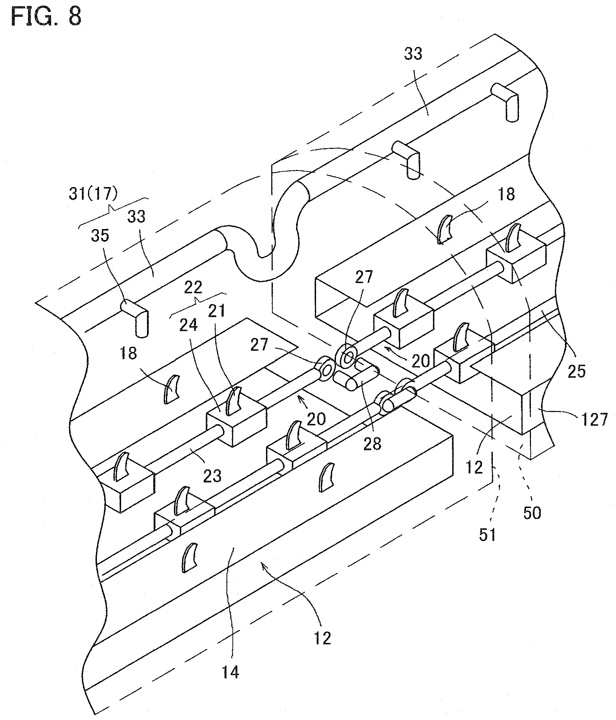

That is, the tray mounting base 12 is formed by bending both ends of a flat sheet in a U shape as shown in FIG. 6 and FIG. 8, and is formed of a flat-plate-like base portion 12a, leg portions 12b vertically raised from both ends of the base portion 12a, and the placing portions 14 extending horizontally from the leg portions 12b.

Fixed-side engaging projecting portions 18 are formed on the placing portion 14. One end of the fixed-side engaging projecting portion 18 is swingably fixed to the placing portion 14 of the tray mounting base 12 by a hinge not shown in the drawing and the other end side of the fixed-side engaging projecting portion 18 is biased so as to project outward from the placing portion 14. A stopper not shown in the drawing which restricts the degree of opening of the fixed-side engaging projecting portion 18 is formed on the fixed-side engaging projecting portion 18.

Accordingly, the fixed-side engaging projecting portion 18 is openable about the hinge with limit degree of opening where an angle made by a surface which forms the placing portion 14 and the fixed-side engaging projecting portion 18 which projects in an inclined manner and in a cantilever manner becomes approximately 30° to 60° and the fixed-side engaging projecting portion 18 is not openable beyond the limit degree of opening. That is, the fixed-side engaging projecting portion 18 takes an inclined posture in a state where the other end side of the fixed-side engaging projecting portion 18 projects from the placing portion 14 of the tray mounting base 12.

When the fixed-side engaging projecting portion 18 receives an external force in a vertical direction, the fixed-side engaging projecting portion 18 sinks into the inside of the placing portion 14, while when the external force is removed, the other end side of the fixed-side engaging projecting portion 18 projects outward from the placing portion 14 again. The fixed-side engaging projecting portion 18 is a projection having a non-reversible function.

The conveyance device 15 is formed of two rows of pressing member connecting bodies 20. The pressing member connecting body 20 is formed by joining a plurality of pressing members 22 by string bodies 23 such as wires, chains or belts. In this embodiment, four pressing members 22 are joined to each other at an interval by the wires.

The pressing member 22 has a block-shaped body portion 24, and a moving-side engaging projecting portion (tray facing engaging portion) 21 is mounted on each body portion 24. The moving-side engaging projecting portion 21 has substantially the same structure and function as the fixed-side engaging projecting portion 18 described above. That is, one end of the moving-side engaging projecting portion 21 is swingably fixed to the body portion 24 by a hinge not shown in the drawing and the other end side of the moving-side engaging projecting portion 21 is biased so as to project outward from the body portion 24.

A stopper not shown in the drawing which restricts the degree of opening of the moving-side engaging projecting portion 21 is formed on the moving-side engaging projecting portion 21. Accordingly, the moving-side engaging projecting portion 21 is openable about the hinge with limit degree of opening where an angle made by a surface of the pressing member 22 and the moving-side engaging projecting portion 21 which projects in an inclined manner and in a cantilever manner becomes approximately 30° to 60° and the moving-side engaging projecting portion 21 is not openable beyond the limit degree of opening. That is, the moving-side engaging projecting portion 21 takes an inclined posture in a state where the other end side of the moving-side engaging projecting portion 21 projects from the body portion.

When the moving-side engaging projecting portion 21 receives an external force in a vertical direction, the moving-side engaging projecting portion 21 sinks into the inside of a main part of the body portion 24, while when the external force is removed, the other end side of the moving-side engaging projecting portion 21 projects outward from the body portion 24 again. The moving-side engaging projecting portion 21 is a projection having a non-reversible function.

While the pressing members 22 are connected to each other by the string bodies 23 as described above, an engaging ring 27 is mounted on end portions of the string bodies 23 at both ends of the conveyance device 15.

The pressing member connecting bodies 20 in two rows are arranged parallel to each other with a fixed distance therebetween. To be more specific, the respective pressing member connecting bodies 20 are disposed in a region surrounded by the leg portions 12b of the tray mounting base 12 and in the vicinity of inner end portions of the placing portions 14.

The illumination unit 16 is formed of a fluorescent lamp or an LED (light emitting diode) and emits light of a wavelength suitable for growing plants.

The water supply/discharge facility 17 is formed of: a supply-side pipe 31 for supplying a culture solution to the cultivation trays 38; and a collecting-side pipe 32 for collecting a culture solution overflown from the cultivation trays 38.

The supply-side pipe 31 is formed of: one main pipe 33; and a plurality of branch pipes 35 branched from the main pipe 33.

The collecting-side pipe 32 includes a culture solution collecting trough 46.

As shown in FIG. 10, the cultivation tray 38 is formed of a container portion 40 having a quadrangular shape as viewed in a plan view, and a seedling holding plate 41.

The container portion 40 is a tray having a structure which prevents leakage of water and has an open-ended upper surface. The container portion 40 is formed so as to have a slightly larger area in the vicinity of the opening portion.

As shown in FIG. 10, an uneven shape is formed on a bottom of the container portion 40. That is, projecting portions 42 and recessed groove portions 43 are formed on the bottom of the container portion 40 such that the projecting portions 42 and the recessed groove portions 43 are alternately formed in parallel. Vertical wall portions of the recessed groove portions 43 function as engaging portions 45 as described later.

The seedling holding plate 41 is formed of a plate in which a plurality of openings are formed.

Next, a positional relationship between the respective members which form the seedling growing unit 2 and a positional relationship of the cultivation tray 38 are described.

The tray mounting base 12 and the conveyance device 15 are disposed at the position of the bottom in the case 5. Further, as described previously, the pressing member connecting bodies 20 in two rows are disposed at a portion inside the tray mounting base 12.

The tray mounting base 12 is slightly inclined in a direction which intersects with a longitudinal direction in the case 5.

That is, the placing portions 14 of the tray mounting base 12 extending in two rows are slightly inclined laterally such that the aisle-side side surface portion 7 is lower than the back-side side surface portion 8.

Accordingly, when the cultivation tray 38 is placed on the tray mounting base 12 as shown in FIG. 9, the cultivation tray 38 is slightly inclined in the lateral direction.

The conveyance devices 15 are connected to each other by a power transmission member 28 as described later, and can make the pressing members 22 travel in a longitudinal direction (a direction which connects the openings at both ends) of the case 5 by starting a motor not shown in the drawing.

The main pipe 33 of the supply-side pipe 31 of the water supply/discharge facility 17 is disposed in the vicinity of an upper end of the back-side side surface portion 8.

The branch pipes 35 of the water supply/discharge facility 17 open above the tray mounting base 12.

The culture solution collecting trough 46 of the water supply/discharge facility 17 is mounted at a lower position in a height direction in the vicinity of the aisle-side side surface portion 7.

The illumination units 16 are mounted on an inner side of the roof portion 6 inside the case 5. Mounting positions of the illumination units 16 are positions at which the illumination units 16 can irradiate the cultivation tray 38 with light on the tray mounting base 12.

Next, the unit plant cultivation device 1 is described.

The unit plant cultivation device 1 is formed by connecting the plurality of seedling growing units 2 in series. The plurality of seedling growing units 2 have the same shape and structure, and an introducing opening 50 of the case 5 of another seedling growing unit 2 is connected to a discharge-side opening 51 of the case 5 of one seedling growing unit 2.

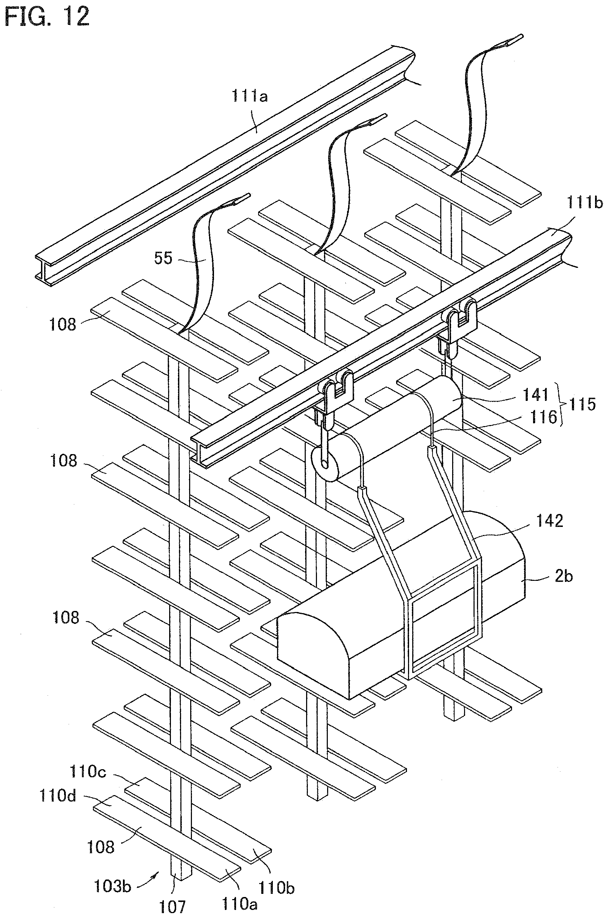

In an actual configuration, the cases 5 of the seedling growing units 2 are made to face each other with a gap formed therebetween, and the connecting member 55 is mounted between the cases 5 so as to connect the cases 5 to each other. As shown in FIG. 4 and FIG. 5, the connecting member 55 is formed of a belt, and as shown in FIG. 4 and FIG. 12, one end of the connecting member 55 is fixed to pillars 107 of the young seedling frame 103a and the grown seedling frame 103b respectively. A width of the connecting member 55 is shorter than a width of the case 5. To be more specific, the width of the connecting member 55 is approximately 30 cm to 80 cm.

The connecting member 55 is formed in a belt shape and is wound around a gap portion formed between the cases 5.

That is, the cases 5 of the seedling growing units 2 are arranged linearly as shown in FIG. 4, FIG. 5A and FIG. 5B. A gap which allows an operator's hand to pass therethrough is formed or opened between the discharging-side opening 51 of the case 5 of one seedling growing unit 2 and the introducing opening 50 of the case 5 of another seedling growing unit 2 disposed adjacently to the one seedling growing unit 2. To be more specific, the seedling growing units 2 are disposed such that discharging-side opening 51 of the case 5 of the one seedling growing unit 2 and the end portion of the neighboring seedling growing unit 2 face each other with a gap of approximately 10 cm to 40 cm formed therebetween.

Wires, pipes and the like are connected between the seedling growing units 2 disposed adjacently to each other as shown in FIG. 8.

To be more specific, the main pipes 33 of the supply-side pipes 31 of the water supply/discharge facility 17 are connected to each other. The cooling water collecting trough 37 of the roof portions 6 are connected to each other between the seedling growing units 2 (not shown in the drawing). Power supply wires of the illumination units 16 are connected to each other between the seedling growing units 2 (not shown in the drawing).

Water supply/discharge facilities 17 disposed inside the respective cases 5 are connected to each other by couplers or the like not shown in the drawing thus forming a series of water supply/discharge lines. That is, the main pipe 33 of the supply-side pipe 31 in the seedling growing unit 2 has both ends thereof connected to the main pipes 33 of the neighboring seedling growing units 2 thus forming a series of water supply lines.

In the same manner, the culture solution collecting trough 46 of the seedling growing unit 2 has both ends thereof connected to the culture solution collecting troughs 46 of the neighboring seedling growing units 2 thus forming a series of water discharge lines.

When necessary, any one or several ones of the following members or parts are disposed between the seedling growing units 2 disposed adjacently to each other.
(1) connecting unit and/or merging unit of supply passages of culture solution
(2) branching unit for branching branch pipe from main pipe through which culture solution is supplied
(3) connecting unit and/or merging unit of discharge passages of culture solution
(4) connecting unit and/or merging unit of electric wiring of illumination
(5) branching units leading to respective illuminations from main line of electric wiring of illumination
(6) connecting unit and/or merging unit of air conditioning ducts
(7) branching unit of air conditioning duct
(8) connecting unit and/or merging unit of carbon dioxide pipes
(9) branching unit of carbon dioxide pipe
(10) valve
(11) distributer
(12) fuse.

Further, the pressing member connecting bodies 20 disposed inside the cases 5 disposed adjacently to each other are connected to each other. To be more specific, the engaging rings 27 formed on end portions of the pressing member connecting bodies 20 are connected to each other by the power transmission member 28. In this embodiment, the power transmission member 28 is a connecting fitting which connects the engaging rings 27 to each other and transmits power in an axial direction.

Both ends of the pressing member connecting bodies 20 connected in series are wrapped around rolls 30a, 30b.

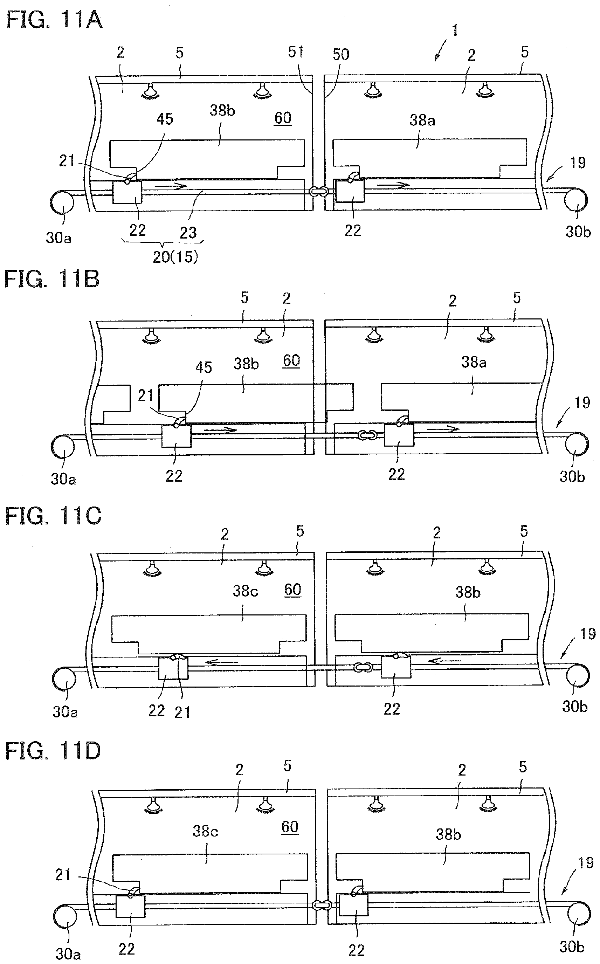

As a result, the conveyance devices 15 in the cases 5 are connected to each other so that the conveyance devices 15 in the plurality of cases 5 form a series of conveyance units 19 as shown in FIG. 11.

The rolls 30a, 30b can be rotated in both normal and reverse directions by motors not shown in the drawing. Due to the rotation of the rolls 30a, 30b, the pressing member connecting bodies 20 are moved so that the pressing members 22 are linearly moved inside the cases 5.

A longitudinal end portion of the tray mounting base 12 in one case 5 and a longitudinal end portion of the tray mounting base 12 in another case 5 disposed adjacently to the one case 5 are arranged at positions disposed close to each other so that the placing portions 14 of the tray mounting bases 12 in the plurality of cases 5 form a series of tray traveling surfaces.

The connecting member 55 is mounted between the cases 5 of two seedling growing units 2 from the outside.

By connecting the cases 5 of the plurality of seedling growing units 2 by the connecting members 55, a continuous cylindrical space 60 is formed inside the cases 5. Any suitable door or lid may be disposed on both ends of the unit plant cultivation device 1. Accordingly, the cylindrical spaces 60 form an approximately closed space. However, the degree of sealing of the cylindrical spaces is not so high.

A power supply line 25 is connected to the illumination units 16 in each case 5 so that turning-on and turning-off of the illumination units 16 can be performed for each seedling growing unit 2. Illuminance can be adjusted also for each case 5. A volume (not shown in the drawing) for adjusting illuminance and a fuse are disposed between the cases 5 of two seedling growing units 2.

While the cultivation trays 38 are placed on the tray mounting base 12, the branch pipes 35 of the above-mentioned water supply/discharge facility 17 open above the cultivation tray 38. With such a configuration, when a culture solution is discharged from the branch pipes 35, all discharged culture solution enters the cultivation trays 38.

The cultivation tray 38 takes an inclined posture and hence, a surplus culture solution overflows from sides of the cultivation tray 38 to aisle-side side surface portion 7 sides. On the other hand, the culture solution collecting troughs 46 are disposed at the low position in a height direction in the vicinity of the aisle-side side surface portions 7 and hence, an overflown culture solution is collected by the culture solution troughs 46.

Pipes 36 mounted on ridge portions of the roof portions 6 are connected to each other thus forming a series of cooling water supply lines.

The cooling water supply lines are provided for preventing an excessive elevation of a temperature in the cylindrical space 60 which may be caused by the illumination units 16 disposed in the respective cases 5. The cooling water supply line discharges water through holes formed in the pipe 36 and cools the roof portion 6 of the case 5. Discharged water flows on the roof portion 6 having an arcuate shape and is collected by the cooling water collecting trough 37.

Next, functions of the unit plant cultivation device 1 are described.

In the unit plant cultivation device 1, the cultivation trays 38 are inserted into the continuous cylindrical space 60 from one end side (upstream side end portion). Seedlings of plants such as lettuces are planted in advance in the cultivation tray 38. In this embodiment, four cultivation trays 38 are placed on the tray mounting base 12 of one seedling growing unit 2. Although the number of cultivation trays 38 which can be inserted into one seedling growing unit 2 is arbitrary, it is recommendable that the number of insertable cultivation trays 38 be approximately two to six.

As shown in FIG. 7 and FIG. 9, the cultivation trays 38 are placed on the tray mounting base 12 in the case 5 in an inclined posture.

Then, a culture solution is supplied to the cultivation tray 38 by the supply-side pipe 31 of the water supply/discharge facility 17, and an overflown culture solution is recovered by the culture solution collecting trough 46. Accordingly, the inside of the cultivation tray 38 is constantly filled with a culture solution.

Light necessary for growth of seedlings is supplied by the illumination units 16. In this embodiment, since an inner surface of the case 5 is coated with a reflective paint, light which impinges on the inner wall of the case 5 is also reflected and is irradiated to the seedlings.

A temperature, a humidity and a carbon dioxide concentration in the cylindrical space 60 are adjusted by an air conditioning facility or the like not shown in the drawings.

To achieve an object of maintaining an environment in the cylindrical space 60 by preventing the intrusion of outside air and an object of preventing the intrusion of dust in the cylindrical space 60, it is desirable to maintain a slightly positive pressure in the cylindrical space 60 compared to an atmospheric pressure.

The cultivation tray 38 placed in the cylindrical space 60 is moved to a downstream side each time that a fixed time elapses. For example, every 24 hours elapse, the conveyance device 15 is operated so as to move the cultivation tray 38 from one seedling growing unit 2 to another seedling growing unit 2 disposed adjacently to the one seedling growing unit 2 on a discharge side opening 51 side.

Next, the manner of operation of moving the cultivation tray 3 is described with reference to FIG. 11.

The cultivation tray 38 is placed on the tray mounting base 12 as described, and the cultivation tray 38 is slidably movable on the placing portions 14 of the tray mounting base 12.

Two rows of pressing member connecting bodies 20 of the conveyance device 15 are disposed inside the placing portions 14 of the tray mounting base 12, and the side portions of the cultivation tray 38 are disposed over the pressing member connecting bodies 20 so as to cover the pressing member connecting bodies 20 as shown in FIG. 7.

In such a state, the rolls 30a, 30b are rotated so as to operate the pressing member connecting bodies 20 of the conveyance device 15 in an arrowed direction shown in FIG. 11A. That is, the motor not shown in the drawing is rotated so as to move the pressing members 22 of the conveyance device 15 from the introducing opening 50 side to the discharging side opening 51 side in the case 5.

During such operations, the moving-side engaging projecting portions 21 of the conveyance device 15 project and take an inclined posture as shown in FIG. 11A. A bottom of the cultivation tray 38 is formed in an uneven shape as shown in FIG. 10.

Accordingly, when the pressing members 22 of the conveyance device 15 are moved from the introducing opening 50 side to the discharging side opening 51 side, the projecting portions of the moving-side engaging projecting portions 21 engage with the vertical wall portions (engaging portions 45) of the recessed groove portions 43, and move the cultivation trays 38 from the introducing opening 50 side to the discharging side opening 51 side as shown in FIG. 11B.

As a result, inside each seedling growing unit 2, the respective cultivation trays 38 move toward a downstream side. Then, the cultivation tray 38 positioned on a most downstream side of each seedling growing unit 2 enters the neighboring seedling growing unit 2.

That is, the cultivation tray 38 is transferred from the tray mounting base 12 of the original seedling growing unit 2 to the tray mounting base 12 of the neighboring seedling growing unit 2 on a downstream side, and moves striding over the seedling growing units 2. That is, in this embodiment, the conveyance devices 15 in the respective cases 5 form the series of conveyance units 19, and the seedling growing units 2 move downward in a striding manner over the seedling growing units 2 by the conveyance units 19.

In this embodiment, the cultivation trays 3 in each seedling growing unit 2 are sequentially fed out to the preceding seedling growing unit 2 by the series of conveyance units 19. Anew cultivation tray 38 is carried in the seedling growing unit 2 from an upstream side.

Thereafter, as shown in FIG. 11C, the motor not shown in the drawing is rotated so as to rotate the rolls 30a, 30b in the reverse direction so that the conveyance device 15 is moved in the reverse direction whereby the pressing members 22 are moved from the discharging side opening 51 side to the introducing opening 50 side.

In such an operation, while the moving-side engaging projecting portion 21 of the conveyance device 15 impinges on the bottom of the cultivation tray 38, the moving-side engaging projecting portion 21 is in an inclined posture and hence, the moving-side engaging projecting portion 21 is brought into contact with the cultivation tray 38 from a lower side of the inclination. Since the inclined surface of the moving-side engaging projecting portion 21 is brought into contact with the cultivation tray 38, the moving-side engaging projecting portion 21 is pushed down in a downward direction by a vertical-direction component force generated by inclination.

In such a state, although the moving-side engaging projecting portion 21 is biased so as to project toward the outside from the body portion, when the moving-side engaging projecting portion 21 receives an external force in a vertical direction, the moving-side engaging projecting portion 21 sinks into the body portion 24 of the pressing member 22.

Accordingly, as shown in FIG. 11C and FIG. 11D, the moving-side engaging projecting portion 21 passes below the projecting portion of the cultivation tray 38, and the new cultivation tray 38 and the moving-side engaging projecting portion 21 return to the relationship shown in FIG. 11A.

As the pressing member 22 moves from the discharging side opening 51 side to the introducing opening 50 side, the cultivation tray 38 receives a force directed from the discharging side opening 51 side to the introducing opening 50 side. However, the fixed-side engaging projecting portion 18 is formed on the placing portion 14, and the fixed-side engaging projecting portion 18 has a reverse operation stopping function by projecting outward from the placing portion 14 thus preventing the cultivation tray 38 from moving toward the introducing opening 50 side from the discharging side opening 51 side.

In the unit plant cultivation device 1, the cultivation tray 38 is fed from a start end to a terminal end with spending days ranging from approximately 10 days to 30 days. Then, the cultivation tray 38 is taken out at the terminal end, and grown plants are harvested or the cultivation tray 38 is carried in another unit plant cultivation device 1 again so as to make seedlings grow further.

That is, the cultivation tray 38 in which seedlings are planted is inserted into the seedling growing unit 2 positioned at the start end of the unit plant cultivation device 1, leaves of seedlings are irradiated with light by turning on the illumination unit 16 so that the seedlings are grown by absorbing a culture solution in the cultivation tray 38 through roots of the seedlings. Then, the conveyance device 15 is driven so as to slowly move the cultivation tray 38 inside the cylindrical space 60. When the cultivation tray 38 reaches the terminal end of one unit plant cultivation device 1 or when the cultivation tray 38 passes through the plurality of unit plant cultivation devices 1 and reaches the terminal end, the seedlings are grown to an extent that the seedlings are edible and hence, the seedlings are harvested from the cultivation tray 38 and are shipped.

In the unit plant cultivation device 1 according to this embodiment, in adjusting a temperature of the unit plant cultivation device 1, water is auxiliarily discharged from the pipes 36 of the cooling water supply line so that excessive temperature elevation caused by the illumination units 16 is suppressed.

Next, the comprehensive plant cultivation device (plant cultivation system) 100 is described.

The comprehensive plant cultivation device 100 includes 24 unit plant cultivation devices 1, a tray carrying-in device 101, a tray exchange device 102, a tray carrying-out device 112, an open/close member 118, and a tray conveyer 140. The comprehensive plant cultivation device 100 also includes an air conditioning facility 122 and a carbon dioxide supply facility 123.

Regarding breakdown of 24 unit plant cultivation devices 1, 24 unit plant cultivation devices 1 are formed of 16 young seedling unit plant cultivation devices 1 a each of which is formed of the young seedling growing units 2a, and 8 grown seedling unit plant cultivation devices 1b each of which is formed of the grown seedling growing units 2b.

The young seedling unit plant cultivation device 1 a and the grown seedling unit plant cultivation device 1b are mounted on the young seedling frame 103a and the grown seedling frame 103b respectively thus forming a group of young seedling unit plant cultivation devices 105 and a group of grown seedling unit plant cultivation devices 106.

The group of young seedling unit plant cultivation devices 105 is formed by arranging 16 young seedling unit plant cultivation devices 1a in a matrix of two rows and eight stages on the young seedling frame 103 a, while the group of grown seedling unit plant cultivation devices 106 is formed by arranging 8 grown seedling unit plant cultivation devices 1b in a matrix of 2 rows and 4 stages on the grown seedling frame 103b.

The arrangement of the respective devices in the comprehensive plant cultivation device 100 is shown in FIG. 2. From the left end in FIG. 2, the tray carrying-in device 101, the group of young seedling unit plant cultivation devices 105, the tray exchange device 102, the group of grown seedling unit plant cultivation devices 106 and the tray carrying-out device 112 are sequentially disposed. The open/close member 118 is mounted on each of both ends of the group of young seedling unit plant cultivation devices 105 and each of both ends of the group of grown seedling unit plant cultivation devices 106 respectively.

The tray conveyer 140 is disposed above the group of young seedling unit plant cultivation devices 105 and the group of grown seedling unit plant cultivation devices 106. The air conditioning facility 122 and the carbon dioxide supply facility 123 are disposed below the group of young seedling unit plant cultivation devices 105 and the group of grown seedling unit plant cultivation devices 106.

Power supply cables, outer pipes which form a flow passage for a culture solution, carbon dioxide pipes, air conditioning ducts, signal lines and the like are also disposed below the group of young seedling unit plant cultivation devices 105 and the group of grown seedling unit plant cultivation devices 106.

The following members and parts can be disposed below the group of young seedling unit plant cultivation devices 105 and the group of grown seedling unit plant cultivation devices 106 when necessary.
(1) power supply cable
(2) flow passage for culture solution
(3) carbon dioxide pipe
(4) air conditioning duct
(5) signal lines.

As described previously, the young seedling growing unit 2a and the grown seedling growing unit 2b differ from each other only in a total height, and are equal with respect to other structures and functions.

Accordingly, the young seedling frame 103a and the grown seedling frame 103b differ from each other only in the number of stages and a height of each stage, and are equal with respect to other structures.

In view of the above, the grown seedling frame 103b is described hereinafter by representing both frames 103a, 103b.

The grown seedling frame 103b is a shelf which forms the group of grown seedling unit plant cultivation devices 106 by disposing 8 grown seedling unit plant cultivation devices 1b in a matrix of 2 rows and 4 stages. As shown in FIG. 12, the grown seedling frame 103b includes a plurality of pillars 107 and a plurality of holding members 108.

The respective pillars 107 are connected to each other at a plurality of height positions. All of respective pillars 107 are self-standing. The holding members 108 are mounted on the pillar 107. As shown in FIG. 12, the holding member 108 has bottom support portions 110a, 110b, 110c, and 110d in four areas around the pillar 107. The respective bottom support portions 110a, 110b, 110c, and 110d are disposed horizontally.

In the grown seedling frame 103b, the holding members 108 are mounted in 4 stages for disposing the grown seedling unit plant cultivation devices 1b in a matrix of 2 rows and 4 stages.

A distance between the holding members 108 mounted on each pillar 107 is set slightly higher than a height of the grown seedling growing unit 2b.

A distance between the respective pillars 107 is set equal to a length of the grown seedling growing unit 2b. A connecting member 55 is mounted on the respective stages to which the holding members 108 of each pillar 107 are mounted.

Rails 111a, 11 1b are mounted on upper portions on side surface sides of the grown seedling frame 103b, and the lifting and lowering device 115 are mounted on the rails 111a, 111b. The lifting and lowering device 115 travels along the rails 111a, 111b manually or by electric power.

The lifting and lowering device 115 is configured such that a lifting and lowering wires 116 are wound around a roller 141 rotated by a motor not shown in the drawing.

A fork member 142 is suspended by the lifting and lowering wires 116. The fork member 142 has an approximately L-shaped side surface. Accordingly, the fork member 142 has a fork portion 145 where a plurality of horizontal plates 143 project in a cantilever manner as fork. of a forklift.

That is, the fork member 142 is formed such that two horizontal plates 143 disposed parallel to each other are mounted on a connecting portion 146 in a cantilever manner, and extending portions 144 extend from the connecting portion 146 in an oblique upward direction. A width of the fork portion 145 is set shorter than a total length of the seedling growing unit 2.

The lifting and lowering wires 116 are mounted on distal ends of the extending portions 144.

The lifting and lowering wires 116 are mounted at a position where the fork portion 145 can maintain a horizontal posture.

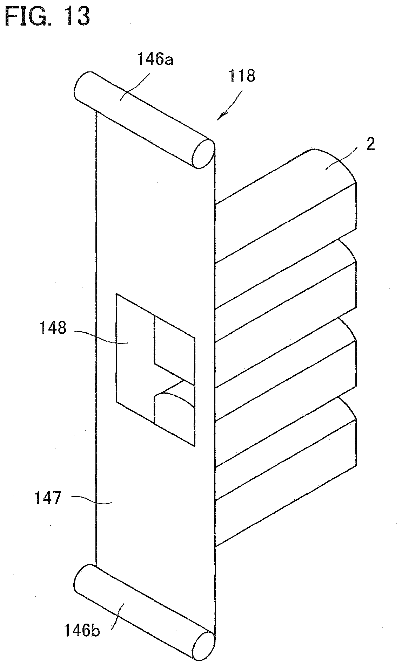

As shown in FIG. 13, the open/close member 118 is formed such that winding rollers 146a, 146b are disposed horizontally in a vertically spaced-apart manner from each other and in parallel to each other, and a sheet 147 is wound around two winding rollers 146a, 146b. An opening 148 is formed in a portion of the sheet 147.

The winding rollers 146a, 146b are respectively formed of a type of roller where motor is incorporated in a roller body. Due to the rotation of the incorporated motor, the winding rollers 146a, 146b are rotated. As a result, the sheet 147 is moved so that the position of the opening 148 is changed.

The tray conveyer 140 is formed of a roller conveyer.

In this embodiment, as shown in FIG. 3, one grown seedling growing unit 2b is placed on one of the bottom support portions 110a, 110b, 110c and 110d disposed around the pillar 107 of the holding member 108 as the center and on one of the bottom support portions 110a, 110b, 110c and 110d of the holding member 108 of the neighboring pillar 107. That is, in this embodiment, a unit mounting space is formed between the pillars 107 disposed adjacently to each other in a length direction and between the upper and lower holding members 108 in a height direction.

In a state where the grown seedling growing unit 2b is placed in the unit mounting space, the cases 5 of the grown seedling growing units 2b disposed adjacently to each other are made to face each other with a gap formed therebetween, and the connecting member 55 is mounted on the facing portions.

The group of grown seedling unit plant cultivation devices 106 is formed such that the grown seedling growing units 2b are mounted in the respective unit mounting spaces of the grown seedling frame 103b such that the grown seedling unit plant cultivation devices 1b are arranged in a matrix of 2 rows and 4 stages.

The steps of mounting the grown seedling growing units 2b in the unit mounting spaces are described hereinafter.

That is, the grown seedling growing units 2b are placed on the fork portion 145 of the fork member 142 one by one, and the lifting and lowering device 115 is lifted or lowered and, at the same time, the lifting and lowering device 115 is made to travel along the rails 111a, 111b so as to move the grown seedling growing unit 2b to the front of the unit mounting space in which the grown seedling growing unit 2b is to be mounted. At this stage of operation, the height of the fork portion 145 is higher than the holding member 108 mounted on the pillar 107.

Then, the lifting and lowering wires 116 are brought into an inclined posture by pushing the fork member 142 so that the fork portion 145 is inserted between the holding members 108. Subsequently, the fork member 142 is lowered by operating the lifting and lowering device 115, and the grown seedling growing unit 2b is transferred to the holding member 108 from the fork portion 145.

The group of young seedling unit plant cultivation devices 105 is formed by mounting the young seedling unit plant cultivation devices 1 a on the young seedling frame 103a in a matrix of two rows and eight stages. Although the young seedling frame 103a differs from the above-mentioned grown seedling frame 103b with respect to the number of holding members 108 and a distance between the holding members 108, the young seedling frame 103a and the grown seedling frame 103b are equal with respect to other constitutions and hence, the detailed description of the young seedling frame 103a is omitted.

All of the tray carrying-in device 101, the tray exchange device 102, and the tray carrying-out device 112 are formed of a lifting and lowering elevator for conveying trays, and are respectively formed of two sets of lifting and lowering tables 125, 126, 127. The tray carrying-in device 101, the tray exchange device 102, and the tray carrying-out device 112 are respectively formed of a lifting and lowering device.

All of the tray carrying-in device 101, the tray exchange device 102, and the tray carrying-out device 112 are configured such that the respective lifting and lowering tables 125, 126, 127 are lifted or lowered by lifting and lowering chains or the like not shown in the drawing.

Roller conveyer devices 130, 131, 132 are mounted on the lifting and lowering tables 125, 126, 127 respectively, and hence, the cultivation trays 38 on the lifting and lowering table 125, 126, 127 can be carried in or carried out by power.

The open/close member 118 is disposed at each of both ends of the group of young seedling unit plant cultivation devices 105 and at each of both ends of the group of grown seedling unit plant cultivation devices 106 respectively. The opening formed on the end portion of each unit plant cultivation device 1 is sealed by the sheet 147 of the open/close member 118.

The end portion of the unit plant cultivation device 1 can be opened by making the opening 148 formed in the sheet 147 of the open/close member 118 aligned with the position of the end portion of the unit plant cultivation device 1.

In the comprehensive plant cultivation device 100 according to this embodiment, young seedlings are grown to a certain size in the former half portion of the comprehensive plant cultivation device 100, and the seedlings are grown to a size which allows harvesting in the latter half portion of the comprehensive plant cultivation device 100.

That is, in the comprehensive plant cultivation device 100 of this embodiment, young seedlings are planted in the cultivation trays 38 in an operation area not shown in the drawing.

Then, the cultivation tray 38 in such a state is placed on the lifting and lowering table 125 of the tray carrying-in device 101. In this embodiment, the roller conveyer device 130 is mounted on the lifting and lowering table 125 and hence, by starting the roller conveyer device 130, it is possible to pull the cultivation tray 38 onto the lifting and lowering table 125 from the outside.

Then, the lifting and lowering table 125 is lifted to a predetermined height, and the cultivation tray 38 is discharged from the lifting and lowering table 125 by starting the roller conveyer device 130 thus carrying the cultivation tray 38 into the young seedling growing unit 2a at a start end portion of any one of the young seedling unit plant cultivation devices 1 a.

As described previously, the open/close member 118 is disposed on the introducing opening 50 of the young seedling growing unit 2a at the start end portion of the young seedling unit plant cultivation device 1a, and the start end portion of the young seedling unit plant cultivation device 1a is opened by making the opening 148 formed in the sheet 147 of the open/close member 118 aligned with the position of an end portion of the unit plant cultivation device 1. Then, the cultivation tray 38 is introduced into the young seedling growing unit 2a from the opening 148 formed in the sheet 147 and, thereafter, the end portion of the young seedling growing unit 2a is closed by moving the position of the opening 148 formed in the sheet 147.

The specific young seedling unit plant cultivation device 1 a into which the cultivation tray 38 is inserted is programed in advance. A series of operations performed after the cultivation tray 38 is placed on the lifting and lowering table 125 of the tray carrying-in device 101 is automatically performed.

That is, the lifting and lowering table 125 is automatically lifted and stopped at a predetermined position. The sheet 147 is moved so as to open the end portion of the young seedling unit plant cultivation device 1a. The roller conveyer device 130 is started so that the cultivation tray 38 is introduced into the young seedling growing unit 2a and, thereafter, the end portion of the young seedling unit plant cultivation device 1a is closed.

The cultivation trays 38 are inserted into each young seedling unit plant cultivation device 1a, and young seedlings are grown in the respective young seedling unit plant cultivation devices 1a until the young seedlings are grown up to a certain size.

That is, seedlings are grown such that the illumination units 16 in the young seedling growing unit 2a are turned on so as to irradiate leaves of the seedlings with light, and the seedlings are made to absorb a culture solution in the cultivation tray 38 through roots of the seedlings. The conveyance device 15 is driven so as to slowly move each tray 38 in the cylindrical space 60 from the upstream side toward the downstream side. That is, each tray 38 strides over the young seedling growing units 2a, and is sequentially moved toward the downstream side. When the cultivation tray 38 reaches a terminal end of the young seedling unit plant cultivation device 1 a, the seedlings are grown to have a height which allows the seedlings to almost reach a ceiling of the case 5.

The cultivation tray 38 which reaches the terminal end of the young seedling unit plant cultivation device 1a is placed on a lifting and lowering table 126 of the tray exchange device 102, and is transferred to the grown seedling unit plant cultivation device 1b.

That is, the open/close member 118 is disposed on the discharging side opening 51 of the young seedling growing unit 2a at the terminal end of the young seedling unit plant cultivation device 1a. The position of the opening 148 of the open/close member 118 is moved so as to open the terminal end of the young seedling unit plant cultivation device 1a. The cultivation tray 38 is discharged from the young seedling growing unit 2a, and is placed on the lifting and lowering table 126 of the tray exchange device 102.

Then, the tray exchange device 102 is lifted and lowered in accordance with a program inputted in advance, and is stopped at a height of the specific grown seedling unit plant cultivation device 1b.

Thereafter, a start end portion of the grown seedling unit plant cultivation device 1b is automatically opened by the open/close member 118 disposed on the introducing opening 50 of the grown seedling growing unit 2b at the start end portion of the grown seedling unit plant cultivation device 1b. The roller conveyer device 131 of the lifting and lowering table 126 is started so as to introduce the cultivation tray 38 into the grown seedling growing unit 2b and, thereafter, the start end portion of the grown seedling unit plant cultivation device 1b is automatically closed.

After the start end portion of the grown seedling unit plant cultivation device 1b is closed, the seedlings are grown in the grown seedling unit plant cultivation device 1b. The case 5 of the grown seedling growing unit 2b forming the grown seedling unit plant cultivation device 1b has a tall height so that the seedlings can be grown to a tall height.

The cultivation tray 38 which reaches a terminal end of the grown seedling unit plant cultivation device 1b is placed on a lifting and lowering table 127 of the tray carrying-out device 112, and the lifting and lowering table 127 is lowered and, thereafter, the cultivation tray 38 is discharged from the comprehensive plant cultivation device 100 by the roller conveyer device 132.

Such a series of operations is also performed automatically.

That is, the open/close member 118 is disposed on the discharging side opening 51 of the grown seedling growing unit 2b at the terminal end of the grown seedling unit plant cultivation device 1b. The open/close member 118 is automatically operated so as to open the terminal end of the grown seedling unit plant cultivation device 1b. The cultivation tray 38 is discharged from the grown seedling growing unit 2b, and is placed on the lifting and lowering table 127 of the tray carrying-out device 112. The lifting and lowering table 127 is lowered and, thereafter, the cultivation tray 38 is discharged from the comprehensive plant cultivation device 100 by the roller conveyer device 132.

In the comprehensive plant cultivation device 100 of this embodiment, a space where plants are grown is limited to the cylindrical space 60 so that a space where a temperature, humidity, carbon dioxide and the like are required to be controlled is narrow. Accordingly, a small energy is required to control the temperature, the humidity, the carbon dioxide and the like.

When a harmful insect invades the unit plant cultivation device 1, extermination of the harmful insect can be performed in a state where an operation of one unit plant cultivation device 1 is stopped and hence, damage does not spread.

In the comprehensive plant cultivation device 100 of this embodiment, a space which should be kept clean is limited to the cylindrical space 60 and hence, unlike a conventional plants factory, it is unnecessary to take a strict countermeasure for prevention of invasion of harmful insects, or to install a large-scaled cleaning device.

Accordingly, crops can be produced by installing the comprehensive plant cultivation device 100 of this embodiment in an abandoned factory or a warehouse.

In the comprehensive plant cultivation device 100 of this embodiment, a space where plants are grown is limited to the cylindrical space 60 and hence, different plants may be grown in one comprehensive plant cultivation device 100.

In installing the comprehensive plant cultivation device 100, the seedling growing units 2 and the frames 103 are manufactured in a factory in advance. These members and units are transported to an installation site, and the comprehensive plant cultivation device 100 is completed by assembling the members and the units to each other at the installation site. Accordingly, an amount of operations to be performed at the installation site can be reduced.

The same goes for the transfer of the comprehensive plant cultivation device 100. The seedling growing units 2 are removed and conveyed. In the same manner, the frames 103 are also removed and conveyed. Then, the comprehensive plant cultivation device 100 can be reconstructed at a new installation place.

Accordingly, a construction period required for manufacturing the comprehensive plant cultivation device 100 and a reconstruction period for reconstructing the comprehensive plant cultivation device 100 are short. For this reason, the comprehensive plant cultivation device 100 is installed in an unused factory or the like, and plants can be produced only for one season, for example.

It is possible to consider a business model which effectively makes use of an unused land by leasing the comprehensive plant cultivation device 100.

In this embodiment, the respective seedling growing units 2 are placed on the shelf-like holding members 108 in a state where the end portions of the respective seedling growing units 2 are made to face each other, and the end portions of the seedling growing units 2 are connected with each other by the connecting member 55 which is a member separate from the seedling growing units 2.

Accordingly, when the connecting member 55 is removed, the engagement between the respective seedling growing units 2 is released so that the seedling growing unit 2 can be taken out individually. Accordingly, when the seedling growing unit 2 becomes defective, the defective seedling growing unit 2 can be removed for repairing, or can be exchanged with a new seedling growing unit 2. That is, in the unit plant cultivation device 1, although the continuous cylindrical space 60 is formed by three or more seedling growing units 2, the seedling growing unit 2 disposed in the intermediate portion can be individually mounted or removed.

In the embodiment described above, the conveyance device 15 is driven by a motor. However, a power for driving the conveyance device 15 is not limited to the motor, and a member which utilizes a pneumatic pressure or a hydraulic pressure may be used.

Further, a handle is inserted into the conveyance device 15, and the conveyance device 15 may be driven by rotating the handle.

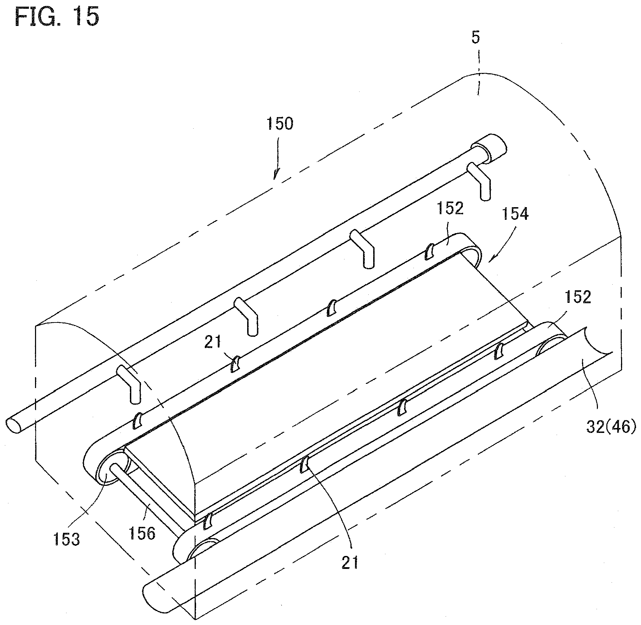

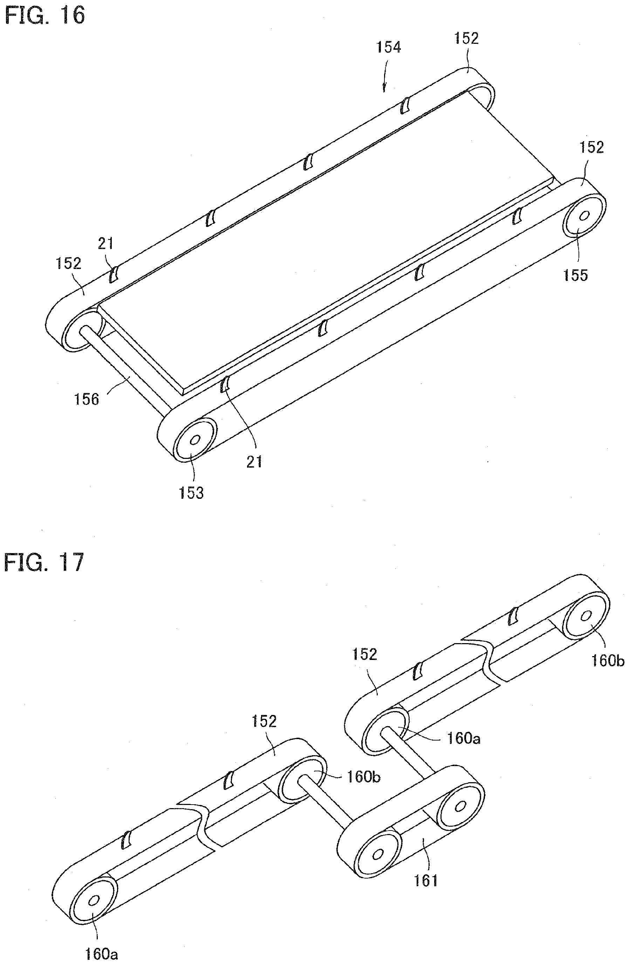

As in the case of a seedling growing unit 150 shown in FIG. 15 and FIG. 16, a conveyance device 154 may have a drive source thereinside.

The conveyance device 154 shown in FIG. 15 and FIG. 16 includes two elongated loop bodies 152 and a drive mechanism which drives the two elongated loop bodies 152.

The elongated loop body 152 is formed of a belt or a chain. The elongated loop body 152 includes the plurality of moving-side engaging projecting portions 21.

Each elongated loop body 152 extends between and is wound around a drive side rotary body 153 and a follower side rotary body 155. The drive side rotary body 153 and the follower side rotary body 155 are formed of a pulley or a sprocket.

The two elongated loop bodies 152 are disposed parallel to each other with a fixed distance therebetween. A drive shaft 156 is interposed between two drive side rotary bodies 153, and an interlocking shaft (not shown in the drawing) is interposed between two follower side rotary bodies 155.

A motor not shown in the drawing is engaged with the drive shaft 156 so that the drive shaft 156 can be rotated in both forward and reverse directions. Accordingly, the two elongated loop bodies 152 can be rotated in both forward and reverse directions.

In the embodiment shown in FIG. 15 and FIG. 16, the motor is incorporated in each case 5. However, power may be transmitted between the seedling growing units 150 which are disposed adjacently to each other.

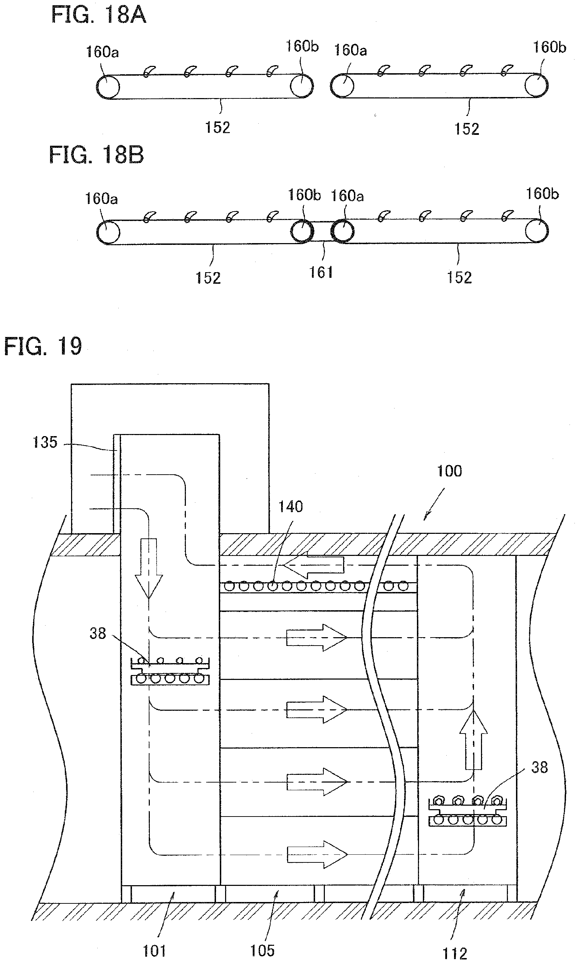

For example, as shown in FIG. 17 and FIG. 18, double rotary bodies 160a, 160b are used. An elongated loop body 152 is made to extend between and be wound around the double rotary bodies 160a, 160b. The double rotary body 160a of the seedling growing unit 150 and the double rotary body 160b of another seedling growing unit 150 are connected to each other by a power transmission member 161 formed of a belt, a chain or the like.

The embodiment shown in FIG. 17 and FIG. 18 has the configuration which includes the power transmission member 161 for transmitting power between moving mechanisms incorporated in the cases 5 disposed adjacently to each other.

In the embodiment described above, all series of operations from carrying in the seedling growing unit 2 to carrying out the seedling growing unit 2 are automatically controlled. However, some steps or all steps may be performed manually.

The layout shown in FIG. 2 is designed assuming that the comprehensive plant cultivation device 100 is installed in a vacant warehouse or the like disposed above the ground. However, a place where the comprehensive plant cultivation device 100 is installed can be desirably determined. For example, the comprehensive plant cultivation device 100 may be installed in an underground tunnel, or an underground shopping area which is no longer used.

In this case, a layout shown in FIG. 19 is used. The group of young seedling unit plant cultivation devices 105, the tray exchange device 102, the group of grown seedling unit plant cultivation devices 106, the tray carrying-out device 112 and the tray conveyer 140 are installed under the ground.

The carrying-in port 135 of the tray carrying-in device 101 is disposed above the ground.

In the layout shown in FIG. 19, seedlings are planted to the cultivation tray 38 above the ground. The cultivation tray 38 is lowered to an area under the ground by the tray carrying-in device 101. The cultivation tray 38 is carried in the unit plant cultivation device 1, and the seedlings are grown.

After the seedlings are grown, the cultivation tray 38 is discharged by the tray carrying-out device 112. The cultivation tray 38 is placed on the tray conveyer 140 so as to move to the tray carrying-in device 101 side. Then, the cultivation tray 38 is placed on the tray carrying-in device 101, and is carried out to an area above the ground.

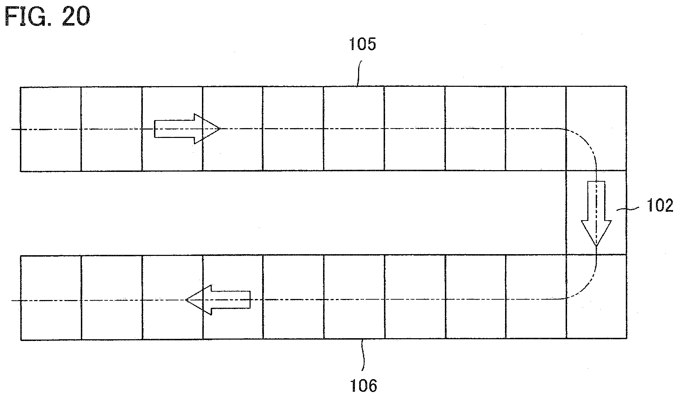

In the above-mentioned embodiment, the group of young seedling unit plant cultivation devices 105 and the group of grown seedling unit plant cultivation devices 106 are arranged in a straight-line shape. However, a layout having bent portions such as a layout shown in FIG. 20 may be adopted.

That is, a device which can change the advancing direction of the cultivation tray 38 is used as the tray exchange device 102, and the cultivation tray 38 is carried in the unit plant cultivation device 1 on the downstream side by changing the advancing direction of the cultivation tray 38.

In the embodiment described above, the plant cultivation device (plant cultivation system) 100 is formed of three kinds of members consisting of the young seedling unit plant cultivation device 1a and the grown seedling growing unit 2b. However, the plant cultivation device 100 may be formed of four or more kinds of unit plant cultivation devices 1.

That is, a plurality of unit plant cultivation devices each having a different environment in the cylindrical space 60, including a height structure or other structures, the temperature setting, the humidity settings, illumination, a kind of culture solution and the like may be prepared, and a tray exchange device which transfers a cultivation tray from one unit plant cultivation device to another unit plant cultivation device may be provided.

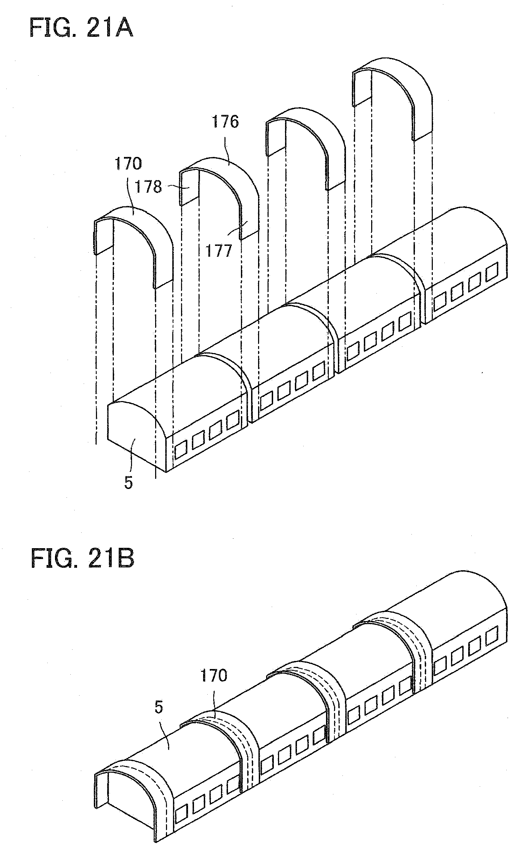

In the embodiment described above, the connecting member 55 has a band shape. However, the connecting member 55 may be formed of a molded product as shown in FIG. 21. A connecting member 170 has a cross-sectional shape similar to a cross-sectional shape of the case 5, and includes an arcuate roof portion 176 and side surface portions 177, 178 each having a vertical wall shape. The connecting member 170 does not include a bottom surface portion.

In the above-mentioned embodiment, in installing the seedling growing unit 2 to the unit installation space, a method is adopted where the seedling growing unit 2 is suspended by the fork member 142, and the seedling growing unit 2 is transferred from the fork member 142 to the holding member 108. However, the present invention is not limited to such a method. For example, the seedling growing unit 2 may be placed on an end portion of the holding member 108 in some way, and the seedling growing unit 2 may be installed to the unit installation space by making the seedling growing unit 2 laterally slide.

That is, the seedling growing unit 2 may be installed to the unit installation space by sliding the case 5 on the bottom support portion 110 to move the case 5 in the direction intersecting with the axis direction of the cylindrical space 60.

In the above-mentioned embodiment, an air pressure in the cylindrical space 60 is held at a positive pressure. However, a pressure in the cylindrical space 60 may be set equal to an atmospheric pressure.

Another embodiment of the present invention is described. To facilitate the description, members having substantially the same function as the members in the previously described embodiment are given the same numbers, and the repeated description is omitted.

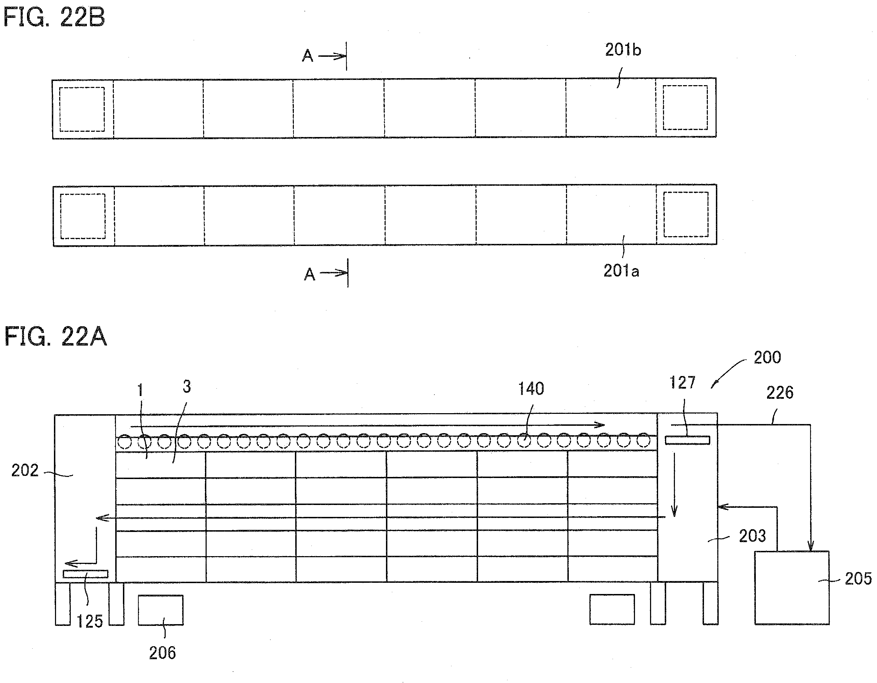

FIG. 22 shows a comprehensive plant cultivation device 200 according to another embodiment of the present invention.

In the comprehensive plant cultivation device 200, independent two systems consisting of comprehensive plant cultivation devices 201 a, 201b are disposed so as to face each other with a passage interposed therebetween.

The two systems consisting of the comprehensive plant cultivation devices 201a, 201b have the same structure and the same function.

Each comprehensive plant cultivation device 200 is formed of: five unit plant cultivation devices 1; an introducing/discharging-side lifting and lowering device 202; a returning lifting and lowering device 203; a tray conveyer 140; an air conditioning device 205, and a culture solution supply device 206.

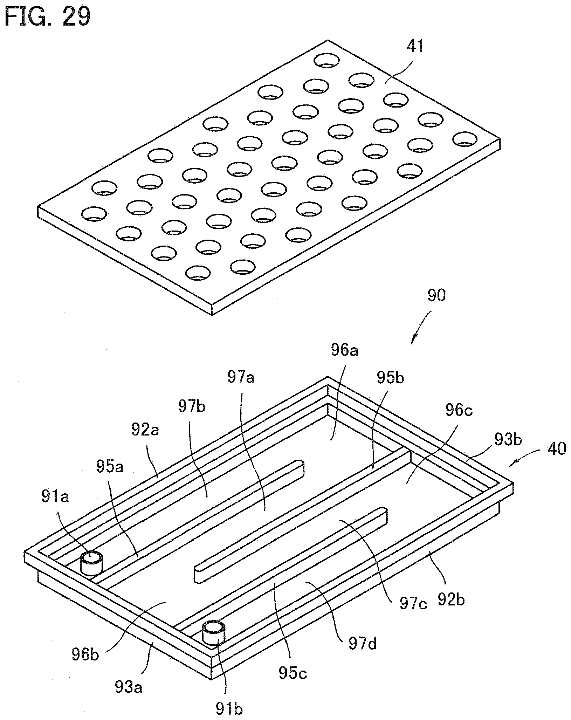

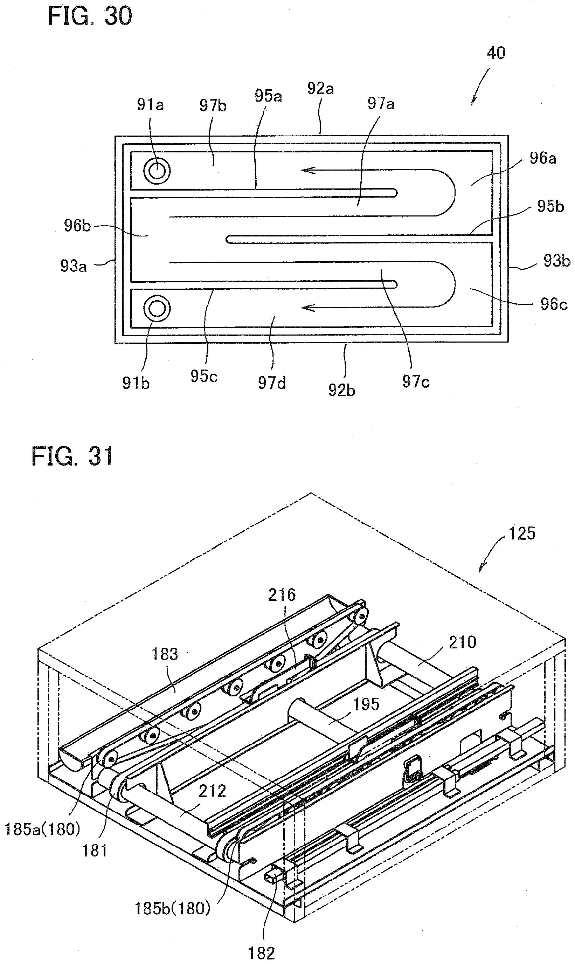

In the comprehensive plant cultivation device 200, a cultivation tray 90 as shown in FIG. 29 and FIG. 30 is used.

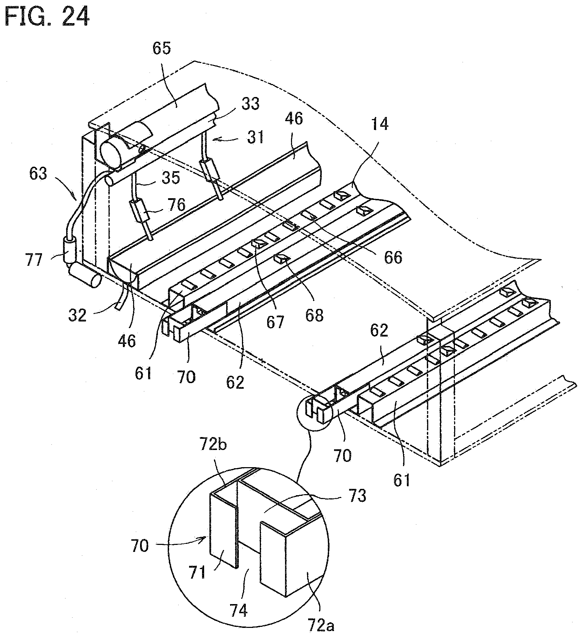

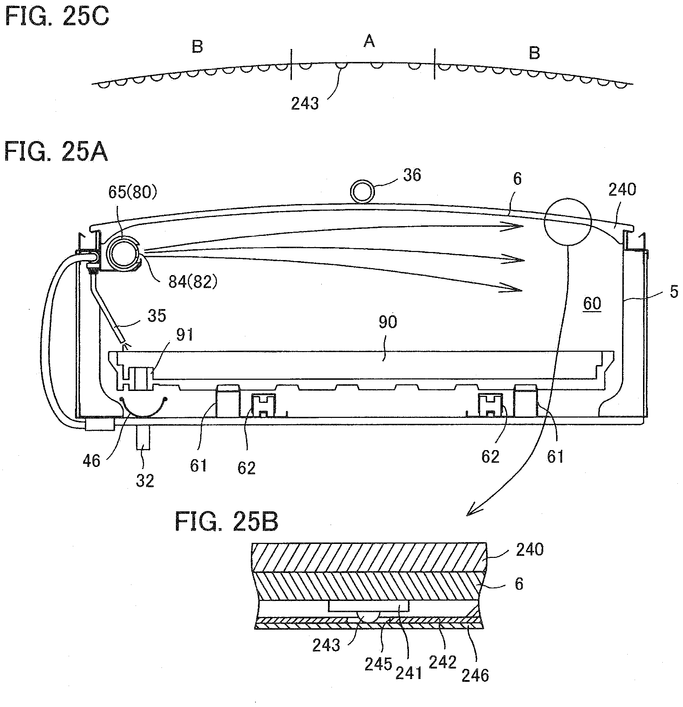

A seedling growing unit 3 forming the unit plant cultivation device 1 is as shown in FIG. 24 and FIG. 25. That is, the seedling growing unit 3 includes a case 5 substantially equal to the case 5 in the previously described embodiment. Tray mounting bases 61, linearly moving members 62, illumination units 243 (FIG. 25), and a water supply/discharge facility 63 are disposed inside the case 5.

Further, in the seedling growing unit 3, an air supply passage forming member 65 is incorporated in the case 5.

The seedling growing unit 3 includes the case 5 which has both ends thereof opened and can cover a peripheral surface of the seedling growing unit 3.

In the same manner as the previously described embodiment, the case 5 has an arcuate roof portion 6. The roof portion 6 is made of a material such as stainless steel which has rust resistance and a favorable thermal conductivity.

As shown in FIG. 25, an outer peripheral surface of the roof portion 6 is covered by a moisturizing member 240. The moisturizing member 240 is formed of a cloth such as a non-woven fabric, a mat or the like. The moisturizing member 240 forms a thin water layer on the outer peripheral surface of the roof portion 6.

Also in this embodiment, a pipe 36 is mounted on a ridge portion of the roof portion 6 so that the roof portion 6 can be cooled by discharging water from the pipe 36. Particularly in this embodiment, the moisturizing member 240 is disposed on the outer peripheral surface of the roof portion 6 so that the roof portion 6 is always brought into a wet state and hence, the moisturizing member 240 cools the roof portion 6 by depriving the roof portion 6 of vaporization heat.

In this embodiment, as shown in FIG. 25, an illumination board 241 is directly mounted on a metal plate forming the roof portion 6. The illumination board 241 is a member where LEDs 243 are mounted on a thin resin board as light emitting elements.

Accordingly, heat generated by the LEDs 243 is directly transmitted to the metal plate forming the roof portion 6, and is radiated to the outside.

In this embodiment, the LEDs 243 are controlled so as to flicker at a fine time interval. That is, the LEDs 243 flicker at intervals at which an operator recognizes with the naked eye that the LEDs 243 continuously emit light.

In this embodiment, a reflector 242 is mounted on an inner surface of the roof portion 6. The reflector 242 has an arcuate shape which conforms to an arcuate shape of the inner surface of the roof portion 6 so that the reflector 242 covers the whole inner surface of the roof portion 6. However, holes 245 are formed in the reflector 242 at portions where the LEDs 243 are present so that the cultivation tray 90 is irradiated with light of the LEDs 243 through the holes 245.

In this embodiment, a transparent resin 246 is further formed on an outer side (cultivation tray 90 side) of the reflector 242. The transparent resin 246 covers also the portions of the reflector 242 where the holes 245 are formed thus preventing invasion of water to the LED 243 side.

In this embodiment, the light emitting elements (LEDs 243) mounted on the inner surface of the roof portion 6 are not uniformly distributed.

To be more specific, a density of arrangement of the LEDs 243 in the vicinity of a peak of the ceiling surface is lower than a density of arrangement of the LEDs 243 in outskirt regions of the ceiling surface.

That is, in this embodiment, the illumination unit is disposed inside the case 5 which is bent in an arcuate shape. In this embodiment, as in the case of a region A shown in FIG. 25C, the LEDs 243 in the vicinity of the peak of the ceiling surface radiate light toward an area directly below the LEDs 243. Accordingly, the LEDs 243 in the vicinity of the peak of the ceiling surface radiate light to a center region of the cultivation tray 90.

On the other hand, as in the case of regions B shown in FIG. 25C, the LEDs 243 mounted on outskirt portions of the ceiling surface radiate light in the oblique direction. Accordingly, the LEDs 243 mounted on the outskirt portions of the ceiling surface radiate light to regions each ranging from an edge to the center region of the cultivation tray 90.

Accordingly, when the light emitting elements are uniformly distributed on the inner surface of the roof portion 6, an amount of light is large at the center region of the cultivation tray 90 compared to side portions of the cultivation tray 90. In view of the above, in this embodiment, the number of LEDs 243 per unit area in the vicinity of the peak of the ceiling surface is reduced.

In the same manner as the previously described embodiment, the tray mounting base 61 is a member which can slidably move the cultivation trays 90 in a state where the cultivation trays 90 are placed on the tray mounting base 61. As a configuration particular to this embodiment, a large number of short rollers 66 are mounted on the placing portions 14.

In the same manner as the previously described embodiment, fixing-side engaging projecting portions 67 are formed on each placing portion 14. Each fixing-side engaging projecting portion 67 is made of spring steel as a whole. One end of each fixing-side engaging projecting portion 67 is fixed to the placing portion 14 of the tray mounting base 61, and the other end side of each fixing-side engaging projecting portion 67 projects outward from the placing portion 14. The fixing-side engaging projecting portion 67 takes an inclined posture in a state where the other end side of the fixing-side engaging projecting portion 67 projects from the placing portion 14 of the tray mounting base 61. When the fixing-side engaging projecting portion 67 receives an external force in a vertical direction, the fixing-side engaging projecting portion 67 sinks into the inside of the placing portion 14, while when the external force is removed, the other end side of the fixed-side engaging projecting portion 67 projects outward from the placing portion 14 again.

In this embodiment, the linearly moving member (pressing member) 62 is an elongated body having an angular rod shape. The linearly moving member 62 is a member which corresponds to the pressing member connecting body 20 in the previously described embodiment, and the linearly moving member 62 is arranged in two rows. It is also safe to say that the linearly moving member 62 is a pressing member having a long length.

A moving-side engaging projecting portion (tray facing engaging portion) 68 is mounted on the linearly moving member 62. The moving-side engaging projecting portion 68 has substantially the same structure and function as the above-mentioned fixing-side engaging projecting portion 67.

The respective seedling growing units 3 are arranged in series, and the linearly moving members 62 of the seedling growing units 3 disposed adjacently to each other in the longitudinal direction are connected to each other by a joint fitting not shown in the drawing.

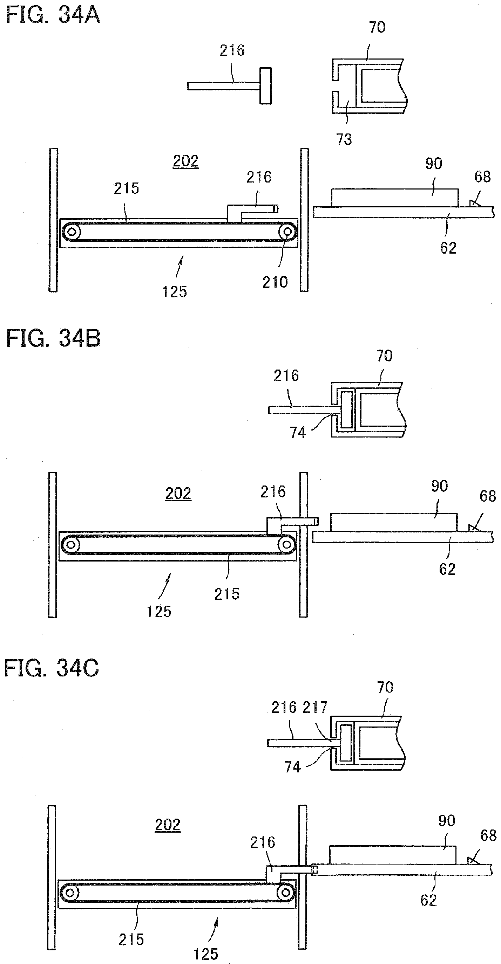

In the seedling growing unit 3 disposed on the most downstream side, a conveyance-unit-side engaging portion 70 as shown in FIGS. 24 and 34 is formed at an end portion of the linearly moving member 62. The conveyance-unit-side engaging portion 70 is a member which has two side walls 72a, 72b and a front wall 71, and also has a quadrangular opening 73 penetrating the conveyance-unit-side engaging portion 70 in the vertical direction. Further, a slit 74 extending in the vertical direction is formed in the front wall 71. Accordingly, an opening extending in the vertical direction is disposed at a distal end of the conveyance-unit-side engaging portion 70, and a space (opening 73) surrounded by the side walls 72a, 72b and the front wall 71 is disposed on the depth side of the opening.

The water supply/discharge facility 63 is formed of: a supply-side pipe 31 for supplying a culture solution to the cultivation trays 90; and a collecting-side pipe 32 for collecting a culture solution overflown from the cultivation trays.

The supply-side pipe 31 is formed of: one main pipe 33; and a plurality of branch pipes 35 branched from the main pipe 33.

The branch pipe 35 is formed of a tube made of a resin or rubber. A throttle member 76 which adjusts an effective degree of opening of the branch pipe 35 by pressing a portion of the tube into a flat shape is mounted on each branch pipe 35. In this embodiment, a supply amount of a culture solution can be adjusted by increasing or decreasing the effective degree of opening of the branch pipe 35 by the throttle member 76.

In this embodiment, a small-sized pump 77 is installed outside each case 5. A discharge side of the small-sized pump 77 is connected to the main pipe 33 of the supply-side pipe 31. It is desirable that a motor for driving the small-sized pump 77 be a motor such as a DC motor where a rotational speed can be desirably changed. That is, it is desirable that the motor for driving the small-sized pump 77 be a motor where a supply amount of a culture solution can be adjusted by controlling a rotational speed of the small-sized pump 77.

The collecting-side pipe 32 includes a culture solution collecting trough 46. In the water supply/discharge facility 63 in this embodiment, the culture solution collecting trough 46 and the supply-side pipe 31 are disposed on the same side, at a position close to a side surface portion of the case 5 as shown in FIG. 24 and FIG. 25. To be more specific, the culture solution collecting trough 46 and the supply-side pipe 31 are disposed on the passage side.

As described previously, in the comprehensive plant cultivation device 200, the independent two systems consisting of the comprehensive plant cultivation devices 201 a, 201b are disposed so as to face each other with the passage interposed therebetween. Accordingly, the culture solution collecting trough 46 and the supply-side pipe 31 of the seedling growing unit 3 belonging to the comprehensive plant cultivation device 201 a and the culture solution collecting trough 46 and the supply-side pipe 31 of the seedling growing unit 3 belonging to the comprehensive plant cultivation device 201b have a mirror-image positional relationship. That is, left and right positions of the culture solution collecting trough 46 and the supply-side pipe 31 are converted between the seedling growing unit 3 belonging to the comprehensive plant cultivation device 201a and the seedling growing unit 3 belonging to the comprehensive plant cultivation device 201b.

In the seedling growing unit 3 adopted in this embodiment, the air supply passage forming member 65 is incorporated in the case 5. The air supply passage forming member 65 is formed of: a main duct 80 made of a resin; a large number of air volume adjusting units 81 disposed on a periphery of the main duct 80; and a small-sized blower 85 incorporated in the main duct 80.

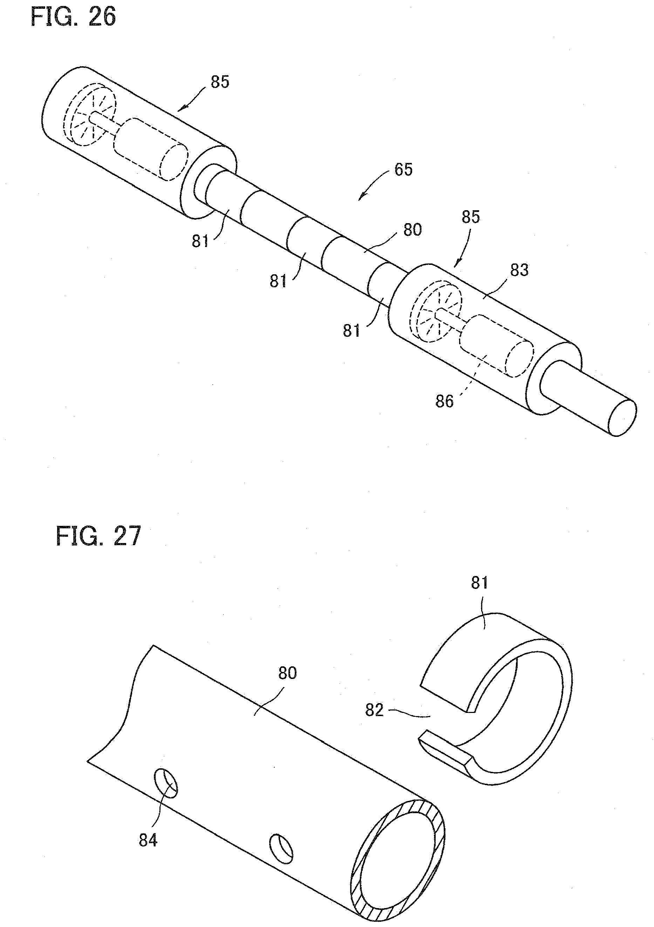

As shown in FIG. 27, a large number of air supply ports 84 are formed in the main duct 80 of the air supply passage forming member 65. Each air supply port 84 is formed of a circular opening.

Each air volume adjusting unit 81 is a unit where a resin duct having a diameter slightly larger than a diameter of the main duct 80 is cut with a short length, and a slit 82 extending in the axis direction is formed on the air volume adjusting unit 81. A cross-sectional shape of the air volume adjusting unit 81 is a "C" shape.

Each air volume adjusting unit 81 is mounted on the main duct 80 at the position of the air supply port 84. That is, the air volume adjusting unit 81 is mounted on the main duct 80 so as to surround the periphery of the main duct 80.

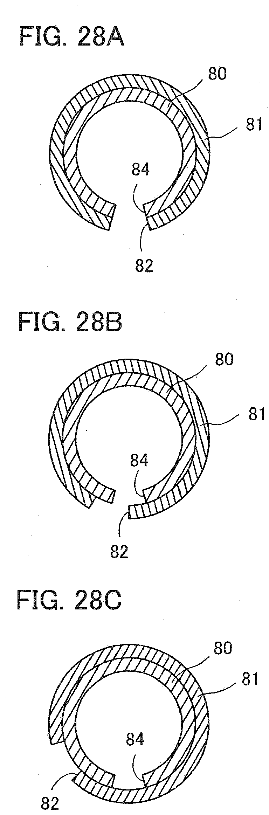

The air volume adjusting unit 81 is rotatable with respect to the main duct 80 so that the air volume adjusting unit 81 can adjust a degree of opening of the air supply port 84. That is, as shown in FIG. 28A, by positioning the slit 82 at the position of the air supply port 84, a substantial opening area of the air supply port 84 can be set to 100 percent. As shown in FIG. 28C, by rotating the slit 82 to a side opposite to the air supply port 84, the air supply port 84 can be closed. As shown in FIG. 28B, by making the slit 82 partially aligned with the air supply port 84, the substantial opening area of the air supply port 84 can be throttled.

A large duct 83 having a large inner diameter is connected to the main duct 80 in series, and the small-sized blower 85 is incorporated in the large duct 83. A motor 86 for driving the small-sized blower 85 is a motor such as a DC motor which can desirably change a rotational speed. The small-sized blower 85 is formed of an axial-flow fan.

The seedling growing units 3 are linearly connected. In connecting the seedling growing units 3 with each other, the main ducts 80 disposed adjacently to each other are also connected with each other. Accordingly, in the cylindrical space 60 of the unit plant cultivation device 1, the main ducts 80 of the air supply passage forming member 65 communicate with each other.

Next, the cultivation tray 90 is described. In the same manner as the previously described embodiment, as shown in FIG. 29, the cultivation tray 90 is formed of a container portion 40 having a quadrangular shape as viewed in a plan view, and a seedling holding plate 41.

The container portion 40 is a tray having a structure which prevents leakage of water and has an open-ended upper surface. The container portion 40 is formed so as to have a slightly larger area in the vicinity of the opening portion.

In this embodiment, overflow pipe portions 91a, 91b are formed in the container portion 40. The overflow pipe portions 91a, 91b are formed at positions of the container portion 40 close to one side of the container portion 40.

That is, a planar shape of the container portion 40 is a rectangular shape, and has long sides 92a, 92b disposed on sides opposite to each other and short sides 93a, 93b disposed on sides opposite to each other. A region surrounded by the long sides 92a, 92b and the short sides 93a, 93b forms a solution storing portion.

The overflow pipe portions 91 a, 91b are formed on a bottom of the container portion 40 at the positions close to the short side 93a.

Each of the overflow pipe portions 91 a, 91b is a tubular portion penetrating the container portion 40 in the vertical direction, and the distal end side of the overflow pipe portion is disposed at a raised position from the bottom of the container portion 40. The overflow pipe portions 91a, 91b function as discharge ports for discharging a surplus culture solution.

In this embodiment, flow passage forming walls 95a, 95b, 95c are formed on the bottom of the container portion 40.

All of the flow passage forming walls 95a, 95b, 95c extend parallel to the long sides 92a, 92b of the container portion 40, and are alternately brought into contact with the short sides 93a, 93b of the container portion 40.

That is, the flow passage forming wall 95a extends parallel to the long side 92a using the short side 93a on the side close to the overflow pipe portions 91 a, 91b as a start end, and reaches an area in the vicinity of the other short side 93b. A distal end of the flow passage forming wall 95a does not reach the other short side 93b so that a gap 96a is formed between the distal end of the flow passage forming wall 95a and the other short side 93b of the container portion 40.

The flow passage forming wall 95b extends parallel to the long side 92a using the other short side 93b as a start end, and reaches an area in the vicinity of the short side 93a on the side close to the overflow pipe portions 91a, 91b. A distal end of the flow passage forming wall 95b does not reach the short side 93a so that a gap 96b is formed between the distal end of the flow passage forming wall 95b and the short side 93a of the container portion 40.

The flow passage forming wall 95c extends parallel to the long side 92a using the short side 93a on the side close to the overflow pipe portions 91a, 91b as a start end, and reaches an area in the vicinity of the other short side 93b. A distal end of the flow passage forming wall 95c does not reach the other short side 93b so that a gap 96c is formed between the distal end of the flow passage forming wall 95c and the other short side 93b of the container portion 40.

As for a region ranging from the center of the bottom of the container portion 40 to the overflow pipe portion 91 a, the gap 96b at a center portion is connected with an outgoing flow passage 97a formed by the flow passage forming wall 95b and the flow passage forming wall 95a. The outgoing flow passage 97a is also connected with the gap 96a. Further, the gap 96a is connected with a return flow passage 97b formed by the flow passage forming wall 95a and the long side 92a of the container portion 40, and reaches the overflow pipe portion 91 a.

That is, the gap 96b at the center portion and the overflow pipe portion 91 a are connected with each other through a series of flow passages formed of the outgoing flow passage 97a, the gap 96a and the return flow passage 97b.

The same goes for a region ranging from the center of the bottom of the container portion 40 to the overflow pipe portion 91b. The gap 96b at the center portion is connected with an outgoing flow passage 97c formed by the flow passage forming wall 95b and the flow passage forming wall 95c. The outgoing flow passage 97c is also connected with the gap 96c. Further, the gap 96c is connected with a return flow passage 97d formed by the flow passage forming wall 95c and the long side 92b of the container portion 40, and reaches the overflow pipe portion 91b.

That is, the gap 96b at the center portion and the overflow pipe portion 91b are connected with each other through a series of flow passages formed of the outgoing flow passage 97c, the gap 96c and the return flow passage 97d.

In this embodiment, a culture solution is dripped to the gap 96b at the center portion. In this embodiment, an area from a portion to which a culture solution is supplied to each of the overflow pipe portion 91 a, 91b is connected through the flow passages connected in series.

In this embodiment, the flow passages from the portion to which a culture solution is supplied to the overflow pipe portions 91a, 91b are flow passages which use straight lines formed basically by the flow passage forming walls 95a, b, c extending in a straight line-shape. However, the flow passages from the portion to which a culture solution is supplied to the overflow pipe portions 91 a, 91b may be curved flow passages by extending the flow passage forming walls in a curved shape.

Next, an introducing/discharging-side lifting and lowering device 202 is described.

The introducing/discharging-side lifting and lowering device 202 includes a lifting and lowering table 125 which is suspended by a chain, a wire or the like and is lifted and lowered. A conveyor device 180, a conveyance unit drive device 181, a cultivation tray inclining unit 182, and a trough 183 are mounted on the lifting and lowering table.

The conveyor device 180 is formed of a pair of belt traveling members 185a, 185b disposed in a spaced apart manner with a fixed distance therebetween.

The belt traveling members 185a, 185b use pulley members 193 disposed on both end portions of a motor-incorporating roller 195 as drive sources. Each of the belt traveling members 185a, 185b includes a plurality of follower pulleys 188a, b. c, d with which a belt 186 is engaged and which change traveling of the belt 186, and a plurality of short rollers 190 which support a weight of a cultivation tray.

That is, the follower pulleys and the short rollers are supported by a pulley support plate 191 in a cantilever manner. The belt 186 extends between and is wound around the pulley member 193 and the follower pulleys 188a, b. c, d.

The conveyor device 180 is formed such that two belts 186 disposed parallel to each other are made to travel by driving the motor-incorporating rollers 195.

The conveyance unit drive device 181 includes a pair of longitudinal-direction drive devices disposed in a spaced apart manner with a fixed distance therebetween.

In the longitudinal-direction drive device, a belt 215 extends and is wound around one of drive side pulley members 211 disposed on both ends of the motor-incorporating roller 210 and one of follower side pulley members 213 disposed on both ends of an idling roller 212. The belt 215 is formed of a toothed belt, and the drive side pulley member 211 and the follower side pulley member 213 are respectively formed of a toothed pulley.

In the conveyance unit drive device 181, a drive-side engaging member 216 is mounted on the belt 215 of the above-mentioned longitudinal-direction drive device. The drive-side engaging member 216 is a member having an approximately T shape, and is formed of an elongated extension rod portion 217 and a drive side engaging portion 218 disposed on a distal end of the extension rod portion 217 and extending in the direction intersecting with the extension rod portion 217.

In this embodiment, the extension rod portion 217 is formed of a strip-shaped steel material.

The extension rod portion 217 is used such that the width direction of the strip-shaped steel material takes a vertical posture, and the longitudinal direction of the strip-shaped steel material is directed in the horizontal direction. The drive side engaging portion 218 is integrally formed with the distal end of the extension rod portion 217.

In this embodiment, the conveyance unit drive device 181 is formed such that the drive-side engaging member 216 is fixed to the belt 215 of the longitudinal-direction drive device, and the drive-side engaging member 216 is linearly moved in the longitudinal direction by driving the motor-incorporating roller 210.

The drive-side engaging member 216 is engaged with a guide not shown in the drawing so that the drive-side engaging member 216 is guided so as to move linearly.

The conveyance unit drive device 181 is disposed on the lifting and lowering table 125 so that the conveyance unit drive device 181 is moved also in the vertical direction by lifting and lowering the lifting and lowering table 125.

Next, the cultivation tray inclining unit 182 is described. The cultivation tray inclining unit 182 is formed of one rod which is moved in the longitudinal direction.

More specifically, the cultivation tray inclining unit 182 is formed or. an inclining engaging member 220; a drive mechanism 221 which linearly moves the inclining engaging member; and a guide member (not shown in the drawing) which guides the inclining engaging member 220 such that the inclining engaging member 220 is moved in the linear direction.

The inclining engaging member 220 is an elongated member, and a rack 222 is formed on a lower surface of the inclining engaging member 220. A pinion 223 is engaged with the rack 222. The pinion 223 is driven by a geared motor 225.

Accordingly, when the pinion 223 is rotated by driving the geared motor 225, the rack 222 which is engaged with the pinion 223 is linearly moved so that the inclining engaging member 220 is linearly moved in the longitudinal direction.

The rack 222 is disposed at the position on the lifting and lowering table 125 close to the unit plant cultivation device 1. Accordingly, when the inclining engaging member 220 is moved to the unit plant cultivation device 1 side by driving the geared motor 225, the inclining engaging member 220 enters the seedling growing unit 3 side of the unit plant cultivation device 1.

The cultivation tray inclining unit 182 is disposed on the lifting and lowering table 125 so that the cultivation tray inclining unit 182 is moved also in the vertical direction by lifting and lowering the lifting and lowering table 125.

Next, a positional relationship between respective members on the lifting and lowering table 125 is described.

As described previously, the conveyor device 180, the conveyance unit drive device 181, the cultivation tray inclining unit 182, and the trough 183 are installed on the lifting and lowering table 125.

The respective members take the positional relationship shown in FIG. 31, and the trough 183 is disposed on one side of the lifting and lowering table 125 in the width direction. In FIG. 31, the trough 183 is disposed on a left end of the lifting and lowering table 125, and the trough 183 extends linearly toward the unit plant cultivation device 1 side.

On the other hand, the cultivation tray inclining unit 182 is installed on the other side of the lifting and lowering table 125 in the width direction. That is, in this embodiment, the trough 183 and the cultivation tray inclining unit 182 are disposed on both sides of the lifting and lowering table 125.

The conveyor device 180 and the conveyance unit drive device 181 are disposed in a region between the trough 183 and the cultivation tray inclining unit 182.

To be more specific, the conveyor device 180 is disposed inside the region between the trough 183 and the cultivation tray inclining unit 182, and the conveyance unit drive device 181 is disposed further inside the conveyor device 180.

That is, as described previously, the conveyor device 180 is formed of the pair of belt traveling members 185a, 185b disposed in a spaced apart manner with a fixed distance therebetween. One of the belt traveling members 185a, 185b is disposed on the side of the trough 183 and the other of the belt traveling members 185a, 185b is disposed on the side of the cultivation tray inclining unit 182.

The conveyance unit drive device 181 is disposed in the region surrounded by the pair of belt traveling members 185a, 185b. That is, the conveyance unit drive device 181 includes the pair of longitudinal-direction drive devices, and one longitudinal-direction drive device is disposed on the side of the belt traveling member 185a and the other longitudinal-direction drive device is disposed on the side of the belt traveling member 185b.

The returning lifting and lowering device 203 is a device which does not include the cultivation tray inclining unit 182, the conveyance unit drive device 181 and the trough 183, but includes the conveyor device 180 disposed on the lifting and lowering table 127.

The tray conveyer 140 is formed of a roller conveyer. However, the tray conveyer 140 may be formed of a belt conveyer.

The tray conveyer 140 is a conveyer which is connected with the conveyor device 180 of the introducing/discharging-side lifting and lowering device 202 in one row when the lifting and lowering table 125 of the introducing/discharging-side lifting and lowering device 202 is lifted to a top stage. Accordingly, the cultivation tray 90 discharged from the introducing/discharging-side lifting and lowering device 202 is placed on the tray conveyer 140, and the tray conveyer 140 can move the cultivation tray 90 to the returning lifting and lowering device 203 side.

When the lifting and lowering table 127 of the returning lifting and lowering device 203 is lifted to the top stage, the conveyor device 180 of the returning lifting and lowering device 203 and the tray conveyer 140 are connected with each other in one row. Accordingly, the cultivation tray 90 can be transferred from the tray conveyer 140 to the returning lifting and lowering device 203.

In the comprehensive plant cultivation device 200 of this embodiment, both the introducing/discharging-side lifting and lowering device 202 and the tray conveyer 140 are surrounded by outer wall members having gas-tightness so that gas-tightness is ensured between the inside and the outside of the comprehensive plant cultivation device 200. The introducing/discharging-side lifting and lowering device 202 and the tray conveyer 140 communicate with each other. Accordingly, a series of air flow passages is formed by the introducing/discharging-side lifting and lowering device 202 and the tray conveyer 140.

A terminal end portion of the tray conveyer 140 is connected to the suction side of the air conditioning device 205 by way of a duct 226.

The discharge side of the air conditioning device 205 is connected to the main duct 80 of the air supply passage forming member 65 in the cylindrical space 60 of each unit plant cultivation device 1 by way of a duct or the like.

Next, a function of the comprehensive plant cultivation device 200 is described. As described previously, in the comprehensive plant cultivation device 200, independent two systems consisting of the comprehensive plant cultivation devices 201a, 201b are disposed so as to face each other with the passage interposed therebetween. Accordingly, both comprehensive plant cultivation devices 201a, 201b are collectively referred to as the comprehensive plant cultivation device 200.

First, a flow of the cultivation tray 90 in the comprehensive plant cultivation device 200 is described. In the comprehensive plant cultivation device 200 of this embodiment, the cultivation tray 90 is conveyed as indicated by an arrow in FIG. 22A.

That is, the cultivation tray 90 is carried in the introducing/discharging-side lifting and lowering device 202. To be more specific, the lifting and lowering table 125 of the introducing/discharging-side lifting and lowering device 202 is lowered to a lowermost portion. Then, the cultivation tray 90 is conveyed by a conveyance device not shown in the drawing, and the cultivation tray 90 is placed on the lifting and lowering table 125. At this time of operation, the cultivation tray 90 is pulled to the lifting and lowering table 125 side by driving the conveyor device 180.

Subsequently, the lifting and lowering table 125 of the introducing/discharging-side lifting and lowering device 202 is lifted to the top stage, and the cultivation tray 90 is transferred from the lifting and lowering table 125 to the tray conveyer 140.

Then, the cultivation tray 90 is transferred to the lifting and lowering table 127 of the returning lifting and lowering device 203 by driving the tray conveyer 140.

Thereafter, the lifting and lowering table 127 of the returning lifting and lowering device 203 is lowered to a desired stage, and the cultivation tray 90 is carried in the unit plant cultivation device 1 at the desired stage.

Subsequently, the cultivation tray 90 is moved to the downstream side while allowing plants to grow in the unit plant cultivation device 1. When the cultivation tray 90 reaches a terminal end of the unit plant cultivation device 1, the cultivation tray 90 is moved to the lifting and lowering table 125 of the introducing/discharging-side lifting and lowering device 202. Then, the lifting and lowering table 125 is lowered to a lowermost stage, and the cultivation tray 90 is discharged from the lifting and lowering table 125 by driving the conveyor device 180.

Next, functions which feature the comprehensive plant cultivation device 200 of this embodiment is described.

In the comprehensive plant cultivation device 200 of this embodiment, in taking out the cultivation tray 90, which reaches the terminal end of the unit plant cultivation device 1, to the lifting and lowering table 125 of the introducing/discharging-side lifting and lowering device 202, the cultivation tray 90 is inclined toward the culture solution collecting trough 46 side in the seedling growing unit 3 disposed at the terminal end so as to drain a culture solution in the seedling growing unit 3.

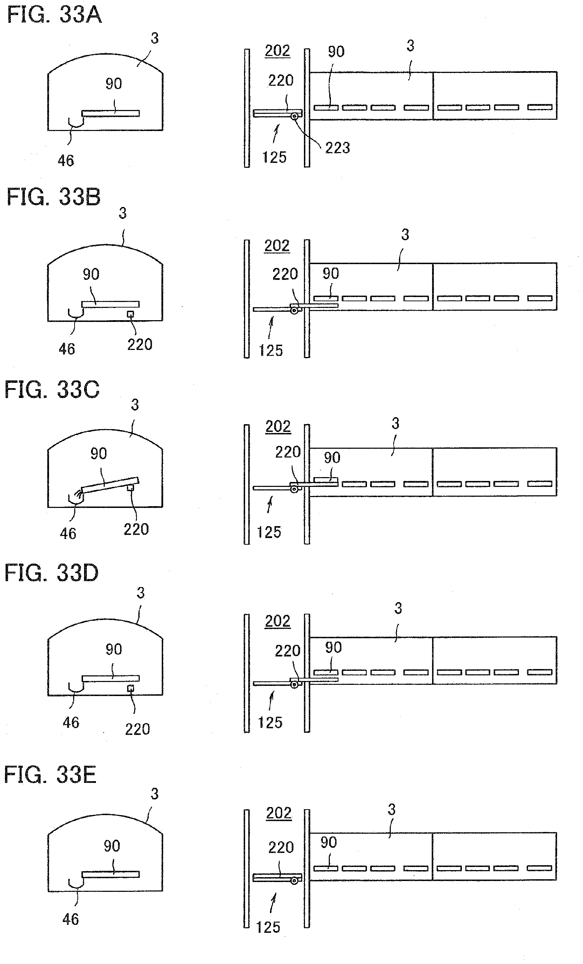

Hereinafter, the operation for draining a culture solution is described with reference to FIG. 33.

In introducing the cultivation tray 90, which reaches the terminal end of the unit plant cultivation device 1, to the lifting and lowering table 125 of the introducing/discharging-side lifting and lowering device 202, the lifting and lowering table 125 is moved as shown in FIG. 33A so as to make a height of the lifting and lowering table 125 agree with a height of the corresponding unit plant cultivation device 1.

In this embodiment, the inclining engaging member 220 is disposed on the lifting and lowering table 125. However, the inclining engaging member 220 is pulled into the region of the lifting and lowering table 125 so that the inclining engaging member 220 is disposed at the position where the inclining engaging member 220 is not engaged with the cultivation tray 90. Accordingly, even when the lifting and lowering table 125 is lifted and lowered, there is no possibility that the inclining engaging member 220 collides with the seedling growing unit 3 or the cultivation tray 90.

The same goes for the conveyance unit drive device 181. The drive-side engaging member 216 is pulled into the region of the lifting and lowering table 125. Accordingly, even when the lifting and lowering table 125 is lifted and lowered, there is no possibility that the drive-side engaging member 216 collides with the seedling growing unit 3 or the cultivation tray 90.

Subsequently, the pinion 223 is rotated by driving the geared motor 225 so that the rack 222 which is engaged with the pinion 223 is linearly moved. Accordingly, the inclining engaging member 220 is made to advance thus being inserted into the seedling growing unit 3 at the terminal end as shown in FIG. 33B.

As shown in FIG. 33B, the inclining engaging member 220 is moved to the lower side of the cultivation tray 90 on the side opposite to the culture solution collecting trough 46.

As a result, the inclining engaging member 220 is moved from a position where the inclining engaging member 220 cannot be engaged with the cultivation tray 90 to the position where the inclining engaging member 220 can be engaged with the cultivation tray 90.

With such a state, as shown in FIG. 33C, the lifting and lowering table 125 is slightly lifted. As a result, the inclining engaging member 220 is lifted along with the lifting of the lifting and lowering table 125 so that only one side of the cultivation tray 90 is lifted.

Accordingly, the cultivation tray 90 is inclined toward the culture solution collecting trough 46 side so that a culture solution in the cultivation tray 90 is drained.

After the draining of the culture solution is finished, as shown in FIG. 33D, the lifting and lowering table 125 is lowered, and the cultivation tray 90 is returned to an original posture.

Then, as shown in FIG. 33E, the geared motor 225 is subsequently reversely rotated so as to rotate the pinion 223 so that the rack 222 which is engaged with the pinion 223 is linearly moved. Accordingly, the inclining engaging member 220 is made to retract thus being returned from the inside of the seedling growing unit 3 to the lifting and lowering table 125 side.

Subsequently, the cultivation tray 90 at the terminal end of the unit plant cultivation device 1 is pulled out from the seedling growing unit 3 to the lifting and lowering table 125 of the introducing/discharging-side lifting and lowering device 202.

Hereinafter, the operation is described with reference to FIG. 34, FIG. 35 and FIG. 36.

FIG. 34A shows a relationship between the lifting and lowering table 125, the conveyance unit drive device 181, and the seedling growing unit 3 at the terminal end immediately after the inclining engaging member 220 is returned from the inside of the seedling growing unit 3 to the lifting and lowering table 125 side.

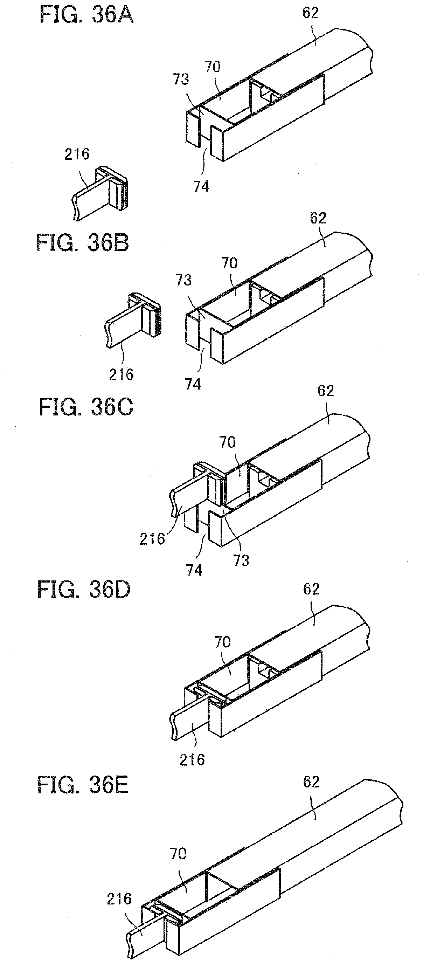

FIG. 36A shows a relationship between the drive-side engaging member 216 and the conveyance-unit-side engaging portion 70 of the seedling growing unit 3 at the terminal end immediately after the inclining engaging member 220 is returned from the inside of the seedling growing unit 3 to the lifting and lowering table 125 side.

In pulling out the cultivation tray 90 at the terminal end to the lifting and lowering table 125 side of the introducing/discharging-side lifting and lowering device 202, the lifting and lowering table 125 is slightly lifted as shown in FIG. 34B.

As a result, the drive-side engaging member 216 is lifted together with the lifting and lowering table 125 as shown in FIG. 34B and FIG. 36B.

Subsequently, the drive-side engaging member 216 is made to advance.

To be more specific, the belt 215 is made to travel by driving the motor-incorporating roller 210 so as to make the drive-side engaging member 216 fixed to the belt 215 move to the unit plant cultivation device 1 side.

In this embodiment, the conveyance-unit-side engaging portion 70 is formed on the seedling growing unit 3 at the terminal end of the unit plant cultivation device 1. However, the lifting and lowering table 125 is lifted in advance and hence, a height of the drive-side engaging member 216 is higher than the conveyance-unit-side engaging portion 70 on the seedling growing unit 3 side (FIG. 36B).

Accordingly, even when the drive-side engaging member 216 is moved to the unit plant cultivation device 1 side, there is no possibility that the drive-side engaging member 216 collides with the conveyance-unit-side engaging portion 70 (FIG. 36C).

As described above, as shown in FIG. 34B and FIG. 36C, the drive side engaging portion 218 of the drive-side engaging member 216 is made to reach the position directly above the conveyance-unit-side engaging portion 70.

Subsequently, the lifting and lowering table 125 is lowered. As a result, as shown in FIG. 34C and FIG. 36D, a distal end portion of the drive-side engaging member 216 enters the quadrangular opening 73 which penetrates the conveyance-unit-side engaging portion 70 in the vertical direction from the upper side. The slit 74 extending in the vertical direction is formed in the front wall 71 of the conveyance-unit-side engaging portion 70, and the extension rod portion 217 of the drive-side engaging member 216 passes through the slit 74.

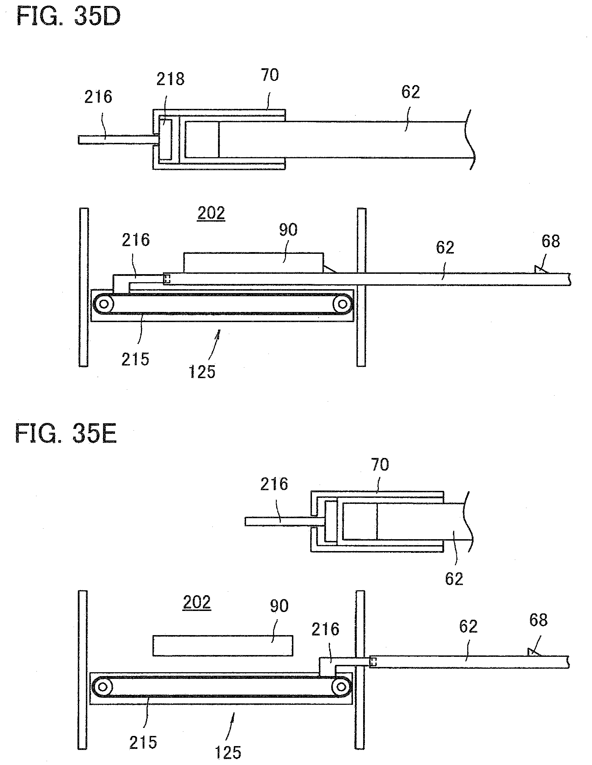

Subsequently, as shown in FIG. 35D and FIG. 36E, the drive-side engaging member 216 is made to retract. In this embodiment, the distal end portion (drive side engaging portion 218) of the drive-side engaging member 216 enters the opening 73 of the conveyance-unit-side engaging portion 70 so that the drive side engaging portion 218 is engaged with the conveyance-unit-side engaging portion 70. Accordingly, along with the retracting of the drive-side engaging member 216, the linearly moving member 62 of the seedling growing unit 3 is linearly moved thus being pulled into the lifting and lowering table 125 side.

As a result, the cultivation tray 90 in the respective seedling growing unit 3 which is engaged with the moving-side engaging projecting portion (drive side engaging portion) 68 of the linearly moving member 62 is made to advance to the introducing/discharging-side lifting and lowering device 202 side and, as shown in FIG. 35D, the cultivation tray 90 at the distal end is pulled into the lifting and lowering table 125 side of the introducing/discharging-side lifting and lowering device 202.

Thereafter, as shown in FIG. 35E, the drive-side engaging member 216 is made to advance to the seedling growing unit 3 side thus returning the linearly moving member 62 to the inside of the seedling growing unit 3.

After these operations, the above-mentioned steps are performed in an opposite manner. To be more specific, the lifting and lowering table 125 is lifted so as to remove the distal end portion (drive side engaging portion 218) of the drive-side engaging member 216 from the opening 73 of the conveyance-unit-side engaging portion 70. Further, the drive-side engaging member 216 is made to retract, and is returned to the lifting and lowering table 125 side.

In this embodiment, the linearly moving member 62 is provided to each of all seedling growing units 3 forming one unit plant cultivation device 1, and all linearly moving members 62 are connected with each other in series by connecting fittings. Accordingly, by linearly moving the linearly moving member 62 of the seedling growing unit 3 at the terminal end of the unit plant cultivation device 1 by the conveyance unit drive device 181 on the lifting and lowering table 125 side, the linearly moving members 62 in all seedling growing units 3 are moved to the introducing/discharging-side lifting and lowering device 202 side. As a result, the cultivation trays 90 in all seedling growing units 3 are moved to the introducing/discharging-side lifting and lowering device 202 side.

Thereafter, the drive-side engaging member 216 is made to advance so as to return the linearly moving member 62 to the inside of the seedling growing unit 3. In accordance with steps opposite to the above-mentioned steps, the lifting and lowering table 125 is lifted so as to lift the drive side engaging portion 218 of the drive-side engaging member 216 thus removing the drive side engaging portion 218 from the opening 73 of the conveyance-unit-side engaging portion 70.

Thereafter, the drive-side engaging member 216 is made to retract, and is returned to the lifting and lowering table 125 side.

Next, the manner of operation of the respective parts when plants are grown in the unit plant cultivation device 1 is described.

In the comprehensive plant cultivation device 200 of this embodiment, wind can be generated in a desired area in the cylindrical space 60.

That is, the comprehensive plant cultivation device 200 of this embodiment includes the air conditioning device 205, and the discharge side of the air conditioning device 205 is connected to the main duct 80 of the air supply passage forming member 65 in the cylindrical space 60 of the respective unit plant cultivation device 1 by way of a duct or the like.

The air supply passage forming member 65 is disposed in the cylindrical space 60 in a penetrating manner in the axis direction, and the small-sized blower 85 is disposed in an intermediate portion of the air supply passage forming member 65. To be more specific, one small-sized blower 85 is provided to each seedling growing unit 3 forking the unit plant cultivation device 1.

A large number of air supply ports 84 are formed in the main duct 80. That is, the large number of air supply ports 84 are disposed between the discharge side of the small-sized blower 85 of one seedling growing unit 3 and the suction side of the small-sized blower 85 of the next seedling growing unit 3.

Accordingly, even when a pressure on the discharge side of the air conditioning device 205 is insufficient, the pressure is increased by the small-sized blower 85 disposed at the intermediate portion so that wind can be supplied to the inside of the cylindrical space 60 from the respective air supply ports 84.

A degree of opening of each air supply port 84 can be changed from a fully closed state to a fully opened state and hence, wind can be supplied to a required place.

In this embodiment, the degree of opening of each air supply port 84 is adjusted manually. However, a method is also recommended where the degree of opening of each air supply port 84 is remote-controlled using a motor valve or the like.

A method is also recommended where a louver which is driven by a power is mounted on the air supply port 84, and the air supply direction is regularly changed.

The control of a supply air volume can be performed based on information such as an electric current supplied to a motor, a rotational speed of the motor or the air supply direction.

A plurality of the air supply passage forming members 65 may be provided. For example, plural systems of the air supply passage forming members 65 are provided, and a temperature or humidity of air which flows through each air supply passage forming member 65 may be changed for the respective air supply passage forming members 65.

A plurality of the air supply passage forming members 65 may be provided, and one or some air supply passage forming members 65 may be used for sucking out air. For example, if there is an area where a concentration of carbon dioxide is high, air in the region may be sucked out by the air supply passage forming member for sucking out air so as to replace the air.

A plurality of the small-sized blowers 85 are provided to the air supply passage forming member 65, and the air supply ports 84 are disposed between two small-sized blowers 85 and hence, depending on an air supply force of the small-sized blower 85, there may be a tendency for some air supply ports 84 to become a negative pressure.

For example, when an air supply volume of one small-sized blower 85 is small and a suction force of the next small-sized blower 85 is strong, the air supply ports 84 disposed between two small-sized blowers 85 tend to become a negative pressure thus sucking out air in the cylindrical space 60.

Accordingly, wind may be generated or carbon dioxide or the like may be diffused by intentionally bringing the air supply ports 84 into a negative pressure thus sucking out air in the cylindrical space 60.

The air supply passage forming member 65 may have an arbitrary cross-sectional shape.

Air discharged from the air supply ports 84 locally generates wind in the vicinity of the air supply ports 84. That is, in this embodiment, an air supply unit which moves air in the cylindrical space by supplying air is provided. The air supply unit can have a different supply air volume for every area so that the air supply unit can locally generate wind.

In an area apart from an area disposed in the vicinity of the air supply ports 84, a flow of air is slow and air is dispersed to the whole cylindrical space 60 so that a pressure in the cylindrical space 60 is increased.

In this embodiment, the cylindrical space 60 is opened to the introducing/discharging-side lifting and lowering device 202 and, further, the introducing/discharging-side lifting and lowering device 202 and the tray conveyer 140 communicate with each other thus forming a series of air flow passages.

A terminal end portion of the tray conveyer 140 is connected to the suction side of the air conditioning device 205 by way of the duct 226. Accordingly, air discharged from the discharge side of the air conditioning device 205 enters the cylindrical space 60 from the air supply ports 84 of the air supply passage forming member 65 and, then, is returned to the air conditioning device 205 through the introducing/discharging-side lifting and lowering device 202 and the tray conveyer 140. That is, air circulates a series of circulation paths including the air conditioning device 205.

Next, the culture solution is described.

In this embodiment, the culture solution supply device 206 is disposed below the comprehensive plant cultivation device 200. The culture solution supply device 206 includes a culture solution tank and a pump not shown in the drawing.

In this embodiment, a supply tank (not shown in the drawing) is disposed above the comprehensive plant cultivation device 200, and the supply tank and the small-sized pumps 77 attached to the respective seedling growing units 3 are connected with each other.

A culture solution is supplied to the supply tank (not shown in the drawing) from the pump of the comprehensive plant cultivation device 200 so that a fixed level of the culture solution is always stored in the supply tank.

The culture solution is fed by gravity to the small-sized pump 77 from the supply tank, and the culture solution pressurized by the small-sized pump 77 is supplied to the main pipe 33 of the supply-side pipe 31. Then, the culture solution is supplied to the respective cultivation trays 90 from the branch pipes 35.

In this embodiment, the culture solution is supplied to an area between two overflow pipe portions 91a, 91b on the short side 93a side of each cultivation tray 90 and on the same side as the overflow pipe portions 91a, 91b. That is, the culture solution is supplied to the gap 96a.

In this embodiment, in the region ranging from the center of the bottom of the container portion 40 to the overflow pipe portion 91 a, one flow passage starting from the gap (the region to which the culture solution is dripped) 96b to the overflow pipe portion 91 a is formed.

The same goes for the region ranging from the center of the bottom of the container portion 40 to the overflow pipe portion 91b. One flow passage starting from the gap 96b (the region to which the culture solution is dripped) at the center portion to the overflow pipe portion 91b is formed in the region.

Accordingly, the culture solution supplied to the gap 96b flows to the overflow pipe portions 91 a, 91b without causing stagnation, is collected by the culture solution collecting trough 46, and is returned to the culture solution supply device 206 by way of pipes not shown in the drawing.

It is recommended to adopt a small-sized centrifugal pump as the small-sized pump 77. However, a pump such as a gear pump where a discharge amount is proportional to a rotational speed may be used as the small-sized pump 77. For example, when the gear pump is used, an amount of culture solution supplied to the respective cultivation trays 90 can be accurately controlled. Further, it is recommended to use a pump which incorporates a check valve as the small-sized pump 77. The above-mentioned gear pump or the like originally has a reverse flow preventing function so that such a pump is also recommended.

Wind generated in the cylindrical space 60 and an amount of a culture solution supplied to the cultivation tray 90 which are described above may be remote-controlled or controlled by a program which is set in advance.

Further, it may be possible to adopt the configuration where the comprehensive plant cultivation device 200 is connected to the Internet, and wind and a culture solution are adjusted from a place remote from the comprehensive plant cultivation device 200.

For example, it is desirable that a rotational speed of the small-sized blower 85, a degree of opening of the air supply ports 84 and the like be remote-controllable. For example, it is desirable that the comprehensive plant cultivation device 200 be connected to the Internet or the like, and a supply air volume and the like be adjustable from a place remote from the comprehensive plant cultivation device 200. When the supply air volume and the like are adjusted through the Internet, it is recommended to provide a camera which monitors the respective parts of the comprehensive plant cultivation device 200 and the cultivation trays 90 in the comprehensive plant cultivation device 200.

It is also recommended that a change in supply air volume be programed in advance according to a kind of plants, a season, a place in the cylindrical space 60 or the like, and the supply air volume be changed in accordance with the program. For example, the degree of growth of plants is determined by a distance from the returning lifting and lowering device 203 of the cylindrical space 60. Accordingly, the generation of wind is programed such that wind of a specific air volume is generated only for a specific time only in a specific area, and the supply air volume is changed in accordance with the program.

The same goes for the supply amount of a culture solution. It is desirable that the comprehensive plant cultivation device 200 be connected to the Internet or the like, and a rotational speed of the small-sized pump 77 and the like be adjustable from a place remote from the comprehensive plant cultivation device 200.

It is also recommended that a supply amount of the culture solution be programed in advance according to a kind of plants, a season, a place in the cylindrical space 60 and the like, and a rotational speed of the small-sized pump 77 or the like be changed in accordance with the program. For example, a supply amount of the culture solution is programed such that a large amount of culture solution is supplied only for a specific time only in a specific area, and the rotational speed of the small-sized pump 77 is changed in accordance with the program.

In the embodiment described above, the conveyance unit drive device 181 which drives the conveyance unit is mounted on the introducing/discharging-side lifting and lowering device 202. The lifting and lowering table 125 of the introducing/discharging-side lifting and lowering device 202 is stopped at a desired stage, and the drive side engaging portion 218 of the conveyance unit drive device 181 is engaged with the linearly moving member 62 on the seedling growing unit 3 side. Then, the linearly moving member 62 of the seedling growing unit 3 is linearly moved thus making the cultivation trays 90 in the all seedling growing units 3 advance.

With such a configuration, the linearly moving members 62 of the plurality of unit plant cultivation devices 1 can be operated by one conveyance unit drive device 181 so that only a small number of parts is required.

Further, a power portion is disposed outside the cylindrical space 60 and hence, maintenance can be easily performed.

In the above-mentioned embodiment, the configuration is adopted where engaging/disengaging between the drive side engaging portion 218 and the linearly moving member 62 on the seedling growing unit 3 side is performed by lifting and lowering the lifting and lowering table 125. However, the present invention is not limited to such a configuration. It may be possible to adopt the configuration where a zipper or the like is provided to the drive side engaging portion 218, and the engaging/disengaging between the drive side engaging portion 218 and the linearly moving member 62 is performed by operating the zipper.

In the embodiment described above, a culture solution is discharged by inclining whole the cultivation tray 90 immediately before the cultivation tray 90 is taken out from the cylindrical space 60. A device which inclines the cultivation tray 90 is mounted on the introducing/discharging-side lifting and lowering device 202.

With such a configuration, the cultivation trays 90 of the plurality of unit plant cultivation devices 1 can be inclined by one conveyance unit drive device 181 so that only a small number of parts is required.

Further, a power portion is disposed outside the cylindrical space 60 and hence, maintenance can be easily performed.

In the above-mentioned embodiment, one end of the cultivation tray 90 is lifted by lifting and lowering the lifting and lowering table 125 thus inclining the cultivation tray 90. However, it may be possible to adopt the configuration where a lifting and lowering unit such as a cylinder or a cam is separately mounted on the lifting and lowering table 125, and one end of the cultivation tray 90 is lifted by the lifting and lowering unit.

In the above-mentioned embodiment, the light emitting members such as the LEDs 243 are mounted on the inner surface of the roof portion 6. Accordingly, a height of the light emitting member (a height with respect to the cultivation tray 90) is always fixed and cannot be changed.

However, it may be possible to adopt the configuration where a height of the light emitting member is changeable. For example, when seedlings are young seedlings, heights of some or the whole light emitting members are lowered so as to make the light emitting members approach the seedlings. Further, it is desirable that the light emitting member disposed at the position where irradiation of light to the seedlings is difficult be turned off or its amount of light be reduced.

### EXPLANATION OF REFERENCE SIGNS

- 1: unit plant cultivation device
- 1a: young seedling unit plant cultivation device
- 1b: grown seedling unit plant cultivation device
- 2, 3, 150: seedling growing unit
- 2a: young seedling growing unit
- 2b: grown seedling growing unit
- 5: case
- 11: inspection window
- 12: tray mounting base
- 15, 154: conveyance device
- 16: illumination unit
- 17: water supply/discharge facility
- 19: conveyance unit
- 20: pressing member connecting body
- 22: pressing member
- 21: moving-side engaging projecting portion
- 28, 161: power transmission member
- 36: pipe
- 37: cooling water collecting trough
- 38, 90: cultivation tray
- 55, 170: connecting member
- 60: cylindrical space
- 62: linearly moving member
- 65: air supply passage forming member
- 70: conveyance-unit-side engaging portion
- 81: air volume adjusting unit
- 84: air supply port
- 85: small-sized blower
- 91a, 91b: overflow pipe portion
- 100: comprehensive plant cultivation device
- 101: tray carrying-in device
- 102: tray exchange device
- 103a: young seedling frame
- 103b: grown seedling frame
- 108: holding member
- 110a: bottom support portion
- 110b: bottom support portion
- 110c: bottom support portion
- 110d: bottom support portion
- 112: tray carrying-out device
- 118: open/close member
- 125: lifting and lowering table
- 181: conveyance unit drive device
- 182: cultivation tray inclining unit
- 216: drive-side engaging member
- 220: inclining engaging member
- 243: LED

## Claims

1. A plant cultivation device comprising:
a plurality of cultivation trays having seedlings or seeds of a plant planted thereon;
an illumination unit irradiating the plant with light;
a conveyance unit sequentially moving the cultivation trays toward a downstream side from an upstream side with simultaneous allowance of growth of the plant on the cultivation trays; and
a plurality of seedling growing units, each of the seedling growing units comprising a case with both ends thereof opened, the case being capable of covering a peripheral surface of the seedling growing unit,
wherein the cases of the plurality of seedling growing units are connected to each other to form a continuous cylindrical space, and
wherein the cultivation trays are placed in the continuous cylindrical space formed by the cases, the cultivation trays being moved toward the downstream side across the cases by the conveyance unit.

2. The plant cultivation device according to claim 1,
wherein the cases of the seedling growing units are lineally disposed with a distance,
wherein a connecting member is disposed between the cases of the adjacent seedling growing units, and
wherein sealing property is held between the adjacent cases by the connecting member to form a continuous cylindrical space.

3. The plant cultivation device according to claim 1 or 2,
wherein the case of the seedling growing unit comprises therein: a placing table placing the cultivation tray thereon; and a pressing member pressing the cultivation tray toward the downstream side.

4. The plant cultivation device according to any one of claims 1 to 3,
wherein air pressure in the cylindrical space is held at more than atmospheric pressure.

5. The plant cultivation device according to any one of claims 1 to 4,
further comprising an air supply unit moving air in the cylindrical space by supplying air, the air supply unit including a supply air volume adjusting unit changing a supply air volume for respective areas.

6. The plant cultivation device according to claim 5,
wherein the supply air unit comprises an air supply passage forming member in the cylindrical space, the air supply passage forming member including a plurality of air supply ports supplying air into the cylindrical space.

7. The plant cultivation device according to claim 6,
further comprising an air volume adjusting unit that opens or closes the air supply ports, or adjusts opening degree of the air supply ports.

8. The plant cultivation device according to claim 6 or 7,
wherein the air supply passage forming member comprises a plurality of blowers therein in series with a distance, and
wherein the air supply ports are disposed between an air supply side of the blower on an upstream side and a suction side of the blower on a downstream side.

9. The plant cultivation device according to any one of claims 1 to 8,
further comprising a culture solution supply unit supplying a culture solution to the cultivation trays, the culture solution supply unit including a solution amount adjusting unit adjusting an amount of the culture solution to be supplied to the cultivation trays.

10. The plant cultivation device according to claim 9,
wherein the solution amount adjusting unit includes an auxiliary pump, the auxiliary pump being attached to each of the plurality of seedling growing units.

11. The plant cultivation device according to any one of claims 1 to 10,
wherein the cultivation tray capable of storing a culture solution therein comprises:
a discharge port discharging a surplus culture solution; and
a culture solution supply unit supplying the culture solution to the cultivation tray from a point close to one side of the cultivation tray, and
wherein the discharge port of the cultivation tray is disposed at a position close to the side to which the culture solution is supplied.

12. The plant cultivation device according to any one of claims 1 to 11,
wherein the cultivation tray includes a culture solution flow passage configured in such a manner that a culture solution is supplied to the cultivation tray from the culture solution supply unit, is circulated inside the cultivation tray, and reaches the discharge port.

13. The plant cultivation device according to any one of claims 1 to 12,
wherein the cultivation tray is configured to store a culture solution therein, and
wherein the plant cultivation device includes a cultivation tray inclining unit that discharges the culture solution by inclining the cultivation tray

14. The plant cultivation device according to any one of claims 1 to 13,
wherein the case comprises:
a ceiling surface bent in an arcuate shape;
the cultivation trays therein; and
the illumination unit on the ceiling surface, the illumination unit being formed of a plurality of light emitting elements, and
wherein density of arrangement of the light emitting elements in the vicinity of a peak of the ceiling surface is lower than in outskirt regions of the ceiling surface.

15. The plant cultivation device according to any one of claims 1 to 14,
wherein the illumination unit flickers at a fine time interval.

16. A plant cultivation system,
wherein the plant cultivation devices according to any one of claims 1 to 15 are installed in plural stages and/or in plural rows.

17. A plant cultivation system having a plurality of the plant cultivation devices according to any one of claims 1 to 15, the plant cultivation system comprising:
the plant cultivation device for young seedlings that has a low height of the cylindrical space; and
the plant cultivation device for grown seedlings that has a higher height of the cylindrical space than the plant cultivation device for young seedlings.

18. A plant cultivation system having a plurality of the plant cultivation devices according to any one of claims 1 to 15, the plant cultivation system comprising:
a plurality of the plant cultivation devices having different structures, and/or different environments of the cylindrical spaces; and
a tray exchange device transferring the cultivation tray from one of the plant cultivation devices to another of the plant cultivation devices.

19. A plant cultivation system having the plant cultivation devices according to any one of claims 1 to 15, disposed in plural stages,
the plant cultivation system including a lifting and lowering device lifting and lowering the cultivation tray thereon.

20. A plant cultivation system having the plant cultivation devices according to any one of claims 1 to 15,disposed in plural stages, the plant cultivation system including a lifting and lowering device lifting and lowering the cultivation tray thereon,
wherein the conveyance unit of the plant cultivation device includes a linearly moving member that linearly moves, the linearly moving member including a tray facing engaging portion, the tray engaging portion engaging with the cultivation tray to convey the cultivation tray, and
wherein the lifting and lowering device includes a conveyance unit drive device driving the conveyance unit of the plant cultivation device.

21. The plant cultivation system according to claim 20,
wherein the conveyance unit has a conveyance-unit-side engaging portion and the conveyance unit drive device has a drive-side engaging portion engaging with the conveyance-unit-side engaging portion,
wherein the conveyance-unit-side engaging portion and the drive-side engaging portion are capable of performing engagement and release of engagement by relative movement of the engaging portions in a vertical direction, and
wherein the engagement and the release of the engagement between the conveyance-unit-side engaging portion and the drive-side engaging portion are performed by lifting and lowering the lifting and lowering device.

22. A plant cultivation system having the plant cultivation devices according to any one of claims 1 to 15 disposed in plural stages, the plant cultivation system including a lifting and lowering device lifting and lowering the cultivation tray thereon,
wherein the cultivation tray is configured to store a culture solution therein, and
wherein the plant cultivation device includes a cultivation tray inclining unit that discharges the culture solution by inclining the cultivation tray.

23. The plant cultivation system according to claim 22,
wherein the cultivation tray inclining unit includes an inclining engaging member engaging with the cultivation tray, and
wherein the lifting and the lowering member is elevated with the inclining engaging member engaged with the cultivation tray to incline the cultivation tray.

24. The plant cultivation system according to claim 23 further comprising a moving unit that moves the inclining engaging member toward the cultivation tray,
wherein the inclining engaging member moves from a position where the inclining engaging member is not engageable with the cultivation tray to a position where the inclining engaging member is engageable with the cultivation tray.
